(19) 

Europäisches
Patentamt

European
Patent Office

Office européen
des brevets

(11) **EP 4 726 506 A1**

(12) **EUROPEAN PATENT APPLICATION**
published in accordance with Art. 153(4) EPC

(43) Date of publication:
**15.04.2026 Bulletin 2026/16**

(21) Application number: **24843277.5**

(22) Date of filing: **21.05.2024**

(51) International Patent Classification (IPC):
*G06F 3/01* (2006.01)    *G06T 19/00* (2011.01)
*G06F 1/16* (2006.01)    *G06F 3/04842* (2022.01)
*H04W 4/80* (2018.01)

(52) Cooperative Patent Classification (CPC):
G06F 1/16; G06F 3/01; G06F 3/04842; G06T 19/00;
H04W 4/80

(86) International application number:
**PCT/KR2024/006833**

(87) International publication number:
**WO 2025/018555 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **14.07.2023  KR 20230092074**
      **23.08.2023  KR 20230110899**

(71) Applicant: **Samsung Electronics Co., Ltd.
Suwon-si, Gyeonggi-do 16677 (KR)**

(72) Inventors:
• **KANG, Doosuk**
  **Suwon-si Gyeonggi-do 16677 (KR)**
• **MOON, Choonkyoung**
  **Suwon-si Gyeonggi-do 16677 (KR)**
• **MIN, Hyunkee**
  **Suwon-si Gyeonggi-do 16677 (KR)**
• **LEE, Mingyu**
  **Suwon-si Gyeonggi-do 16677 (KR)**
• **CHOI, Bokun**
  **Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54) **ELECTRONIC DEVICE AND METHOD FOR TRACKING EXTERNAL OBJECT IN VIRTUAL ENVIRONMENT**

(57)    This wearable device may comprise: a memory for storing instructions; a display; a communication circuit; and at least one processor. The instructions may, when executed individually or collectively by the at least one processor, cause the wearable device to: identify an external object subject to position tracking on the basis of the communication circuit; display, through the display, a screen including a virtual environment in a virtual reality (VR) mode executed on the basis of identification of an event; identify whether the position of the external object is within a reference identification area including an identification area for loss detection in the VR mode; on the basis of identification that the position is within the reference identification area, display the screen including a visual object for the external object through the display; and on the basis of identification that the position is outside the reference identification area, switch the VR mode to an augmented reality (AR) mode.

FIG. 4A

## Description

### [Technical Field]

The following descriptions relate to an electronic device for tracking an external object in a virtual environment and a method thereof.

### [Background Art]

In order to provide enhanced user experience, an electronic device that provides an extended reality service that displays information generated by a computer in connection with an external object in a real world or a virtual object in a virtual world is being developed. The electronic device may include a wearable device that may be worn by a user. For example, the electronic device may include user equipment, AR glasses, VR glasses, and/or a head-mounted device (HMD) (e.g., a video see through (VST) HMD and an optical see through (OST) HMD).

### [Disclosure]

### [Technical Solution]

A wearable device may include memory including one or more storage media, storing instructions. The wearable device may include a display. The wearable device may include communication circuitry. The wearable device may include at least one processor. The instructions, when executed individually or collectively by the at least one processor, may cause the wearable device to, based on the communication circuitry, identify an external object which is a target of a position tracking. The instructions, when executed individually or collectively by the at least one processor, may cause the wearable device to, in a virtual reality (VR) mode being executed based on identifying an event, display, via the display, a screen including a virtual environment. The instructions, when executed individually or collectively by the at least one processor, may cause the wearable device to identify whether a position of the external object is within a reference identification area including an identification area for lost detection of the VR mode. The instructions, when executed individually or collectively by the at least one processor, may cause the wearable device to, based on identifying that the position is within the reference identification area, display, via the display, the screen including a visual object for the external object. The instructions, when executed individually or collectively by the at least one processor, may cause the wearable device to, based on identifying that the position is outside the reference identification area, convert the VR mode to an augmented reality (AR) mode.

According to an embodiment, the external object may include an electronic device providing information for the position tracking in a state where a connection with the wearable device is established, or an electronic device for providing information for the position tracking by transmitting and receiving a signal in a state where the connection with the wearable device is not established.

A method performed by a wearable device may include identifying an external object which is a target of a position tracking. The method may include, in a virtual reality (VR) mode being executed based on identifying an event, displaying a screen including a virtual environment. The method may include identifying whether a position of the external object is within a reference identification area including an identification area for lost detection of the VR mode. The method may include, based on identifying that the position is within the reference identification area, displaying the screen including a visual object for the external object. The method may include, based on identifying that the position is outside the reference identification area, converting the VR mode to an augmented reality (AR) mode.

A non-transitory computer-readable storage medium, when executed individually or collectively by at least one processor of a wearable device including a display and communication circuitry, may store one or more programs including instructions that cause the wearable device to, based on the communication circuitry, identify an external object which is a target of a position tracking. The non-transitory computer-readable storage medium, when executed individually or collectively by the at least one processor, may store one or more programs including instructions that cause the wearable device to, in a virtual reality (VR) mode being executed based on identifying an event, display, via the display, a screen including a virtual environment. The non-transitory computer-readable storage medium, when executed individually or collectively by the at least one processor, may store one or more programs including instructions that cause the wearable device to identify whether a position of the external object is within a reference identification area including an identification area for lost detection of the VR mode. The non-transitory computer-readable storage medium, when executed individually or collectively by the at least one processor, may store one or more programs including instructions that cause the wearable device to, based on identifying that the position is within the reference identification area, display, via the display, the screen including a visual object for the external object. The non-transitory computer-readable storage medium, when executed individually or collectively by the at least one processor, may store one or more programs including instructions that cause the wearable device to, based on identifying that the position is outside the reference identification area, convert the VR mode to an augmented reality (AR) mode.

**[Description of the Drawings]**

FIG. 1 is a block diagram of an electronic device in a network environment according to various embodiments.

FIG. 2A illustrates an example of a perspective view of a wearable device according to various embodiments.

FIG. 2B illustrates an example of one or more hardware disposed in a wearable device according to various embodiments.

FIGS. 3A and 3B illustrate an example of an exterior of a wearable device according to various embodiments.

FIG. 4A illustrates an example of areas set with respect to a wearable device.

FIG. 4B illustrates an example of a method in which a wearable device changes a visual object or an operation mode based on lost detection of an external object.

FIG. 5 illustrates an exemplary block diagram of a wearable device that performs lost detection of an external object.

FIG. 6 illustrates an example of an operation flow of a method of performing lost detection of an external object by a wearable device.

FIGS. 7A to 7D illustrate examples of areas set for lost detection of an external object according to an operation mode.

FIG. 8 illustrates an example in which a wearable device displays a visual object for notifying a risk of loss of an external object.

FIG. 9 illustrates an example in which a wearable device changes an operation mode.

FIG. 10 illustrates an example of an operation flow of a method in which a wearable device changes a visual object or an operation mode based on lost detection of an external object.

**[Mode for Invention]**

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'.

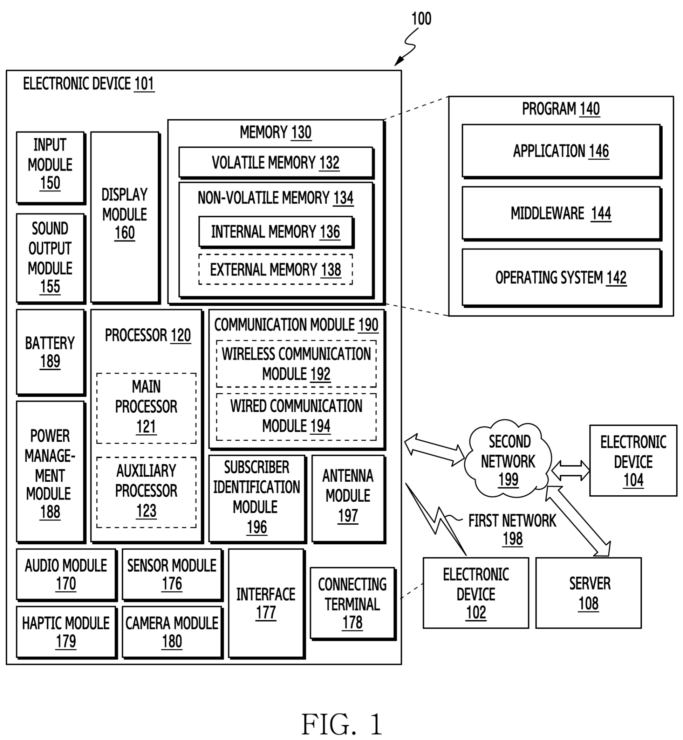

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of lms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mm Wave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

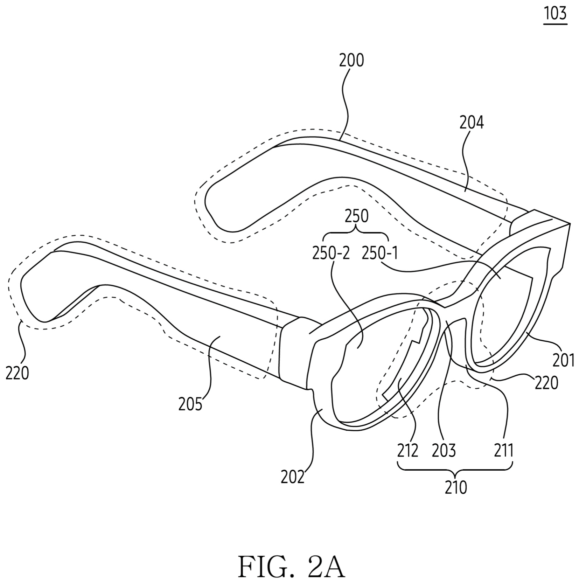

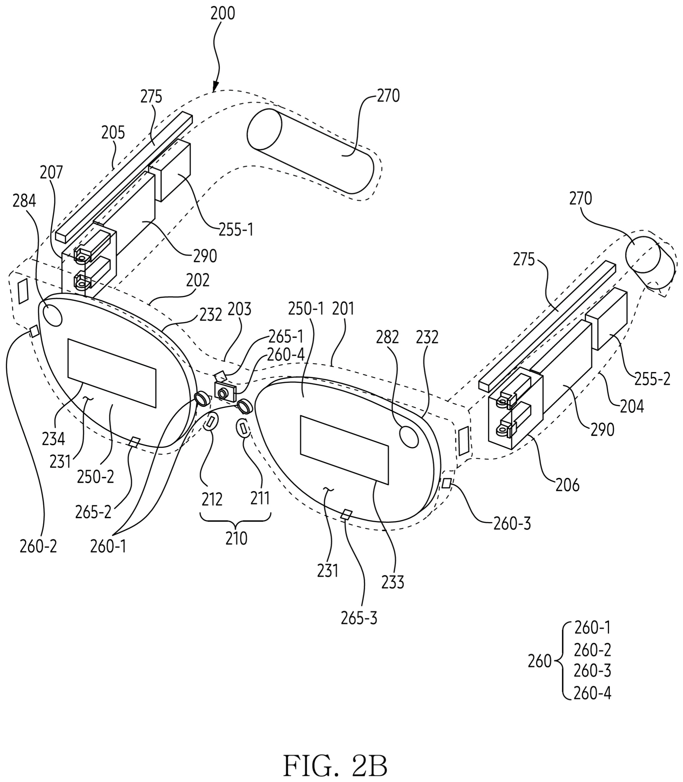

FIG. 2A illustrates an example of a perspective view of a wearable device according to various embodiments. FIG. 2B illustrates an example of one or more hardware disposed in a wearable device according to various embodiments.

According to an embodiment, a wearable device 103 may have a shape of glasses wearable on a part (e.g., a head) of a body of a user. The wearable device 103 of FIGS. 2A to 2B may be an example of the electronic device 101 of FIG. 1. The wearable device 103 may include a head-mounted display (HMD). For example, a housing of the wearable device 103 may include a flexible material such as rubber and/or silicone having a form in close contact with a part (e.g., a part of a face covering both eyes) of the head of the user. For example, the housing of the wearable device 103 may include one or more straps that are able to be twined around the head of the user and/or one or more temples that are attachable to an ear of the head.

Referring to FIG. 2A, the wearable device 103 according to an embodiment may include at least one display 250 and a frame 200 supporting the at least one display 250.

According to an embodiment, the wearable device 103 may be wearable on a portion of the user's body. The wearable device 103 may provide augmented reality (AR), virtual reality (VR), or mixed reality (MR) combining the augmented reality and the virtual reality to a user wearing the wearable device 103. For example, the wearable device 103 may display a virtual reality image provided from at least one optical device 282 and 284 of FIG. 2B on at least one display 250, in response to a user's preset gesture obtained through a motion recognition camera 260-2 and 260-3 of FIG. 2B.

According to an embodiment, the at least one display 250 may provide visual information to a user. For example, the at least one display 250 may include a transparent or translucent lens. The at least one display 250 may include a first display 250-1 and/or a second display 250-2 spaced apart from the first display 250-1. For example, the first display 250-1 and the second display 250-2 may be disposed at positions corresponding to the user's left and right eyes, respectively.

Referring to FIG. 2B, the at least one display 250 may provide visual information transmitted through a lens included in the at least one display 250 from ambient light to a user and other visual information distinguished from the visual information. The lens may be formed based on at least one of a fresnel lens, a pancake lens, or a multi-channel lens. For example, the at least one display 250 may include a first surface 231 and a second surface 232 opposite to the first surface 231. A display area may be formed on the second surface 232 of at least one display 250. When the user wears the wearable device 103, ambient light may be transmitted to the user by being incident on the first surface 231 and being penetrated through the second surface 232. For another example, the at least one display 250 may display an augmented reality image in which a virtual reality image provided by the at least one optical device 282 and 284 is combined with a reality screen transmitted through ambient light, on a display area formed on the second surface 232.

In an embodiment, the at least one display 250 may include at least one waveguide 233 and 234 that transmits light transmitted from the at least one optical device 282 and 284 by diffracting to the user. The at least one waveguide 233 and 234 may be formed based on at least one of glass, plastic, or polymer. A nano pattern may be formed on at least a portion of the outside or inside of the at least one waveguide 233 and 234. The nano pattern may be formed based on a grating structure having a polygonal or curved shape. Light incident to an end of the at least one waveguide 233 and 234 may be propagated to another end of the at least one waveguide 233 and 234 by the nano pattern. The at least one waveguide 233 and 234 may include at least one of at least one diffraction element (e.g., a diffractive optical element (DOE), a holographic optical element (HOE)), and a reflection element (e.g., a reflection mirror). For example, the at least one waveguide 233 and 234 may be disposed in the wearable device 103 to guide a screen displayed by the at least one display 250 to the user's eyes. For example, the screen may be transmitted to the user's eyes based on total internal reflection (TIR) generated in the at least one waveguide 233 and 234.

The wearable device 103 may analyze an object included in a real image collected through a photographing camera 260-4, combine with a virtual object corresponding to an object that becomes a subject of augmented reality provision among the analyzed object, and display on the at least one display 250. The virtual object may include at least one of text and images for various information associated with the object included in the real image. The wearable device 103 may analyze the object based on a multi-camera such as a stereo camera. For the object analysis, the wearable device 103 may execute space recognition (e.g., simultaneous localization and mapping (SLAM)) using the multi-camera and/or time-of-flight (ToF). The user wearing the wearable device 103 may watch an image displayed on the at least one display 250.

According to an embodiment, a frame 200 may be configured with a physical structure in which the wearable device 103 may be worn on the user's body. According to an embodiment, the frame 200 may be configured so that when the user wears the wearable device 103, the first display 250-1 and the second display 250-2 may be positioned corresponding to the user's left and right eyes. The frame 200 may support the at least one display 250. For example, the frame 200 may support the first display 250-1 and the second display 250-2 to be positioned at positions corresponding to the user's left and right eyes.

Referring to FIG. 2A, according to an embodiment, the frame 200 may include an area 220 at least partially in contact with the portion of the user's body in case that the user wears the wearable device 103. For example, the area 220 of the frame 200 in contact with the portion of the user's body may include an area in contact with a portion of the user's nose, a portion of the user's ear, and a portion of the side of the user's face that the wearable device 103 contacts. According to an embodiment, the frame 200 may include a nose pad 210 that is contacted on the portion of the user's body. When the wearable device 103 is worn by the user, the nose pad 210 may be contacted on the portion of the user's nose. The frame 200 may include a first temple 204 and a second temple 205, which are contacted on another portion of the user's body that is distinct from the portion of the user's body.

For example, the frame 200 may include a first rim 201 surrounding at least a portion of the first display 250-1, a second rim 202 surrounding at least a portion of the second display 250-2, a bridge 203 disposed between the first rim 201 and the second rim 202, a first pad 211 disposed along a portion of the edge of the first rim 201 from one end of the bridge 203, a second pad 212 disposed along a portion of the edge of the second rim 202 from the other end of the bridge 203, the first temple 204 extending from the first rim 201 and fixed to a portion of the wearer's ear, and the second temple 205 extending from the second rim 202 and fixed to a portion of the ear opposite to the ear. The first pad 211 and the second pad 212 may be in contact with the portion of the user's nose, and the first temple 204 and the second temple 205 may be in contact with a portion of the user's face and the portion of the user's ear. The temples 204 and 205 may be rotatably connected to the rim through hinge units 206 and 207 of FIG. 2B. The first temple 204 may be rotatably connected with respect to the first rim 201 through the first hinge unit 206 disposed between the first rim 201 and the first temple 204. The second temple 205 may be rotatably connected with respect to the second rim 202 through the second hinge unit 207 disposed between the second rim 202 and the second temple 205. According to an embodiment, the wearable device 103 may identify an external object (e.g., a user's fingertip) touching the frame 200 and/or a gesture performed by the external object by using a touch sensor, a grip sensor, and/or a proximity sensor formed on at least a portion of the surface of the frame 200.

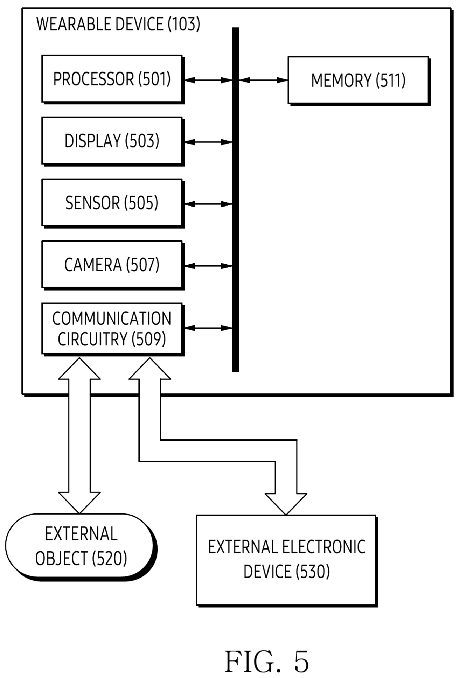

According to an embodiment, the wearable device 103 may include hardware (e.g., hardware to be described later based on the block diagram of FIG. 5) that performs various functions. For example, the hardware may include a battery module 270, an antenna module 275, the at least one optical device 282 and 284, speakers (e.g., speakers 255-1 and 255-2), a microphone (e.g., microphones 265-1, 265-2, and 265-3), a light emitting module (not illustrated), and/or a printed circuit board (PCB) 290 (e.g., printed circuit board). Various hardware may be disposed in the frame 200.

According to an embodiment, the microphone (e.g., the microphones 265-1, 265-2, and 265-3) of the wearable device 103 may obtain a sound signal, by being disposed on at least a portion of the frame 200. The first microphone 265-1 disposed on the bridge 203, the second microphone 265-2 disposed on the second rim 202, and the third microphone 265-3 disposed on the first rim 201 are illustrated in FIG. 2B, but the number and disposition of the microphone 265 are not limited to an embodiment of FIG. 2B. In case that the number of the microphone 265 included in the wearable device 103 is two or more, the wearable device 103 may identify a direction of the sound signal by using a plurality of microphones disposed on different portions of the frame 200.

According to an embodiment, the at least one optical device 282 and 284 may project a virtual object on the at least one display 250 in order to provide various image information to the user. For example, the at least one optical device 282 and 284 may be a projector. The at least one optical device 282 and 284 may be disposed adjacent to the at least one display 250 or may be included in the at least one display 250 as a portion of the at least one display 250. According to an embodiment, the wearable device 103 may include a first optical device 282 corresponding to the first display 250-1, and a second optical device 284 corresponding to the second display 250-2. For example, the at least one optical device 282 and 284 may include the first optical device 282 disposed at a periphery of the first display 250-1 and the second optical device 284 disposed at a periphery of the second display 250-2. The first optical device 282 may transmit light to the first waveguide 233 disposed on the first display 250-1, and the second optical device 284 may transmit light to the second waveguide 234 disposed on the second display 250-2.

In an embodiment, a camera 260 may include the photographing camera 260-4, an eye tracking camera (ET CAM) 260-1, and/or the motion recognition camera 260-2 and 260-3. The photographing camera 260-4, the eye tracking camera 260-1, and the motion recognition camera 260-2 and 260-3 may be disposed at different positions on the frame 200 and may perform different functions. The eye tracking camera 260-1 may output data indicating a position of eye or a gaze of the user wearing the wearable device 103. For example, the wearable device 103 may detect the gaze from an image including the user's pupil obtained through the eye tracking camera 260-1. The wearable device 103 may perform a gaze interaction with at least one object, by using the user's gaze obtained through the eye tracking camera 260-1. The wearable device 103 may represent a portion corresponding to eye of an avatar indicating the user in the virtual space, by using the user's gaze obtained through the eye tracking camera 260-1. The wearable device 103 may render an image (or a screen) displayed on the at least one display 250, based on the position of the user's eye. For example, visual quality (e.g., resolution, brightness, saturation, grayscale, and PPI) of a first area related to the gaze within the image and visual quality of a second area distinguished from the first area may be different. For example, when the wearable device 103 supports an iris recognition function, user authentication may be performed based on iris information obtained using the eye tracking camera 260-1. An example in which the eye tracking camera 260-1 is disposed toward the user's right eye is illustrated in FIG. 2B, but the embodiment is not limited thereto, and the eye tracking camera 260-1 may be disposed alone toward the user's left eye or may be disposed toward two eyes.

In an embodiment, the photographing camera 260-4 may photograph a real image or background to be matched with a virtual image in order to implement the augmented reality or mixed reality content. The photographing camera 260-4 may photograph an image of a specific object existing at a position viewed by the user and may provide the image to the at least one display 250. The at least one display 250 may display one image in which a virtual image provided through the at least one optical device 282 and 284 is overlapped with information on the real image or background including an image of the specific object obtained by using the photographing camera 260-4. The wearable device 103 may compensate for depth information (e.g., a distance between the wearable device 103 and an external object obtained through a depth sensor), by using an image obtained through the photographing camera 260-4. The wearable device 103 may perform object recognition through an image obtained using the photographing camera 260-4. While displaying a screen representing a virtual space on the at least one display 250, the wearable device 103 may perform a pass through function for displaying an image obtained through the photographing camera 260-4 overlapping at least a portion of the screen. In an embodiment, the photographing camera 260-4 may be disposed on the bridge 203 disposed between the first rim 201 and the second rim 202.

The eye tracking camera 260-1 may implement a more realistic augmented reality by matching the user's gaze with the visual information provided on the at least one display 250, by tracking the gaze of the user wearing the wearable device 103. For example, when the user looks at the front, the wearable device 103 may naturally display environment information associated with the user's front on the at least one display 250 at a position where the user is positioned. The eye tracking camera 260-1 may be configured to capture an image of the user's pupil in order to determine the user's gaze. For example, the eye tracking camera 260-1 may receive gaze detection light reflected from the user's pupil and may track the user's gaze based on the position and movement of the received gaze detection light. In an embodiment, the eye tracking camera 260-1 may be disposed at a position corresponding to the user's left and right eyes. For example, the eye tracking camera 260-1 may be disposed in the first rim 201 and/or the second rim 202 to face the direction in which the user wearing the wearable device 103 is positioned.

The motion recognition camera 260-2 and 260-3 may provide a specific event to the screen provided on the at least one display 250 by recognizing the movement of the whole or portion of the user's body, such as the user's torso, hand, or face. The motion recognition camera 260-2 and 260-3 may obtain a signal corresponding to motion by recognizing the user's motion (e.g., gesture recognition), and may provide a display corresponding to the signal to the at least one display 250. The wearable device 103 may identify a signal corresponding to the operation and may perform a preset function based on the identification. The motion recognition camera 260-2 and 260-3 may be used to perform SLAM for 6 degrees of freedom pose (6 dof pose) and/or a space recognition function using a depth map. The wearable device 103 may perform a gesture recognition function and/or an object tracking function, by using the motion recognition camera 260-2 and 260-3. In an embodiment, the motion recognition camera 260-2 and camera 260-3 may be disposed on the first rim 201 and/or the second rim 202.

The camera 260 included in the wearable device 103 is not limited to the above-described eye tracking camera 260-1 and the motion recognition camera 260-2 and 260-3. For example, the wearable device 103 may identify an external object included in the FoV by using a camera disposed toward the user's FoV. The wearable device 103 identifying the external object may be performed based on a sensor for identifying a distance between the wearable device 103 and the external object, such as a depth sensor and/or a time of flight (ToF) sensor. The camera 260 disposed toward the FoV may support an autofocus function and/or an optical image stabilization (OIS) function. For example, in order to obtain an image including a face of the user wearing the wearable device 103, the wearable device 103 may include the camera 260 (e.g., a face tracking (FT) camera) disposed toward the face.

Although not illustrated, the wearable device 103 according to an embodiment may further include a light source (e.g., LED) that emits light toward a subject (e.g., user's eyes, face, and/or an external object in the FoV) photographed by using the camera 260. The light source may include an LED having an infrared wavelength. The light source may be disposed on at least one of the frame 200, and the hinge units 206 and 207.

According to an embodiment, the battery module 270 may supply power to electronic components of the wearable device 103. In an embodiment, the battery module 270 may be disposed in the first temple 204 and/or the second temple 205. For example, the battery module 270 may be a plurality of battery modules 270. The plurality of battery modules 270, respectively, may be disposed on each of the first temple 204 and the second temple 205. In an embodiment, the battery module 270 may be disposed at an end of the first temple 204 and/or the second temple 205.

The antenna module 275 may transmit the signal or power to the outside of the wearable device 103 or may receive the signal or power from the outside. In an embodiment, the antenna module 275 may be disposed in the first temple 204 and/or the second temple 205. For example, the antenna module 275 may be disposed close to one surface of the first temple 204 and/or the second temple 205.

The speaker 255 may output a sound signal to the outside of the wearable device 103. A sound output module may be referred to as a speaker. In an embodiment, the speaker 255 may be disposed in the first temple 204 and/or the second temple 205 in order to be disposed adjacent to the ear of the user wearing the wearable device 103. For example, the speaker 255 may include a second speaker 255-2 disposed adjacent to the user's left ear by being disposed in the first temple 204, and a first speaker 255-1 disposed adjacent to the user's right ear by being disposed in the second temple 205.

The light emitting module (not illustrated) may include at least one light emitting element. The light emitting module may emit light of a color corresponding to a specific state or may emit light through an operation corresponding to the specific state in order to visually provide information on a specific state of the wearable device 103 to the user. For example, when the wearable device 103 requires charging, it may emit red light at a constant cycle. In an embodiment, the light emitting module may be disposed on the first rim 201 and/or the second rim 202.

Referring to FIG. 2B, according to an embodiment, the wearable device 103 may include the printed circuit board (PCB) 290. The PCB 290 may be included in at least one of the first temple 204 or the second temple 205. The PCB 290 may include an interposer disposed between at least two sub PCBs. On the PCB 290, one or more hardware (e.g., hardware to be illustrated later in FIG. 5) included in the wearable device 103 may be disposed. The wearable device 103 may include a flexible PCB (FPCB) for interconnecting the hardware.

According to an embodiment, the wearable device 103 may include at least one of a gyro sensor, a gravity sensor, and/or an acceleration sensor for detecting the posture of the wearable device 103 and/or the posture of a body part (e.g., a head) of the user wearing the wearable device 103. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 103 may identify the user's motion and/or gesture performed to execute or stop a specific function of the wearable device 103 based on the IMU.

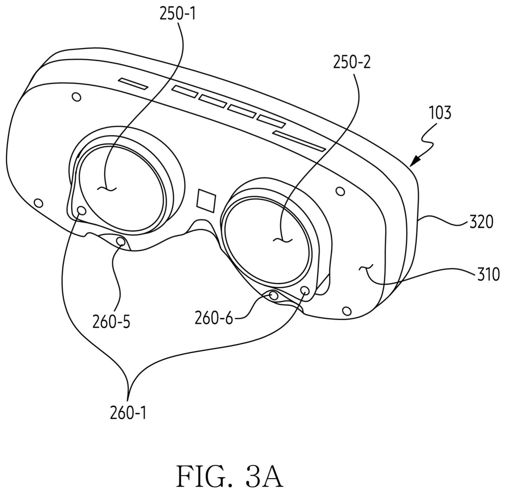

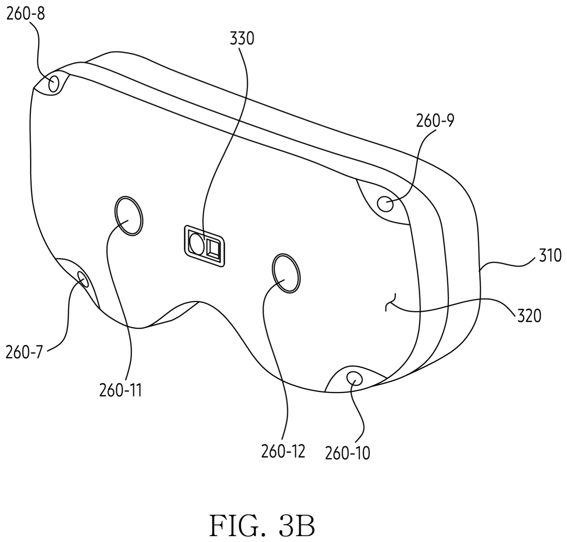

FIGS. 3A and 3B illustrate examples of an exterior of a wearable device according to various embodiments.

The wearable device 103 of FIGS. 3A to 3B may be an example of the electronic device 101 of FIG. 1. According to an embodiment, an example of an exterior of a first surface 310 of a housing of the wearable device 103 may be illustrated in FIG. 3A, and an example of an exterior of a second surface 320 opposite to the first surface 310 may be illustrated in FIG. 3B.

Referring to FIG. 3A, according to an embodiment, the first surface 310 of the wearable device 103 may have an attachable shape on the user's body part (e.g., the user's face). Although not illustrated, the wearable device 103 may further include a strap for being fixed on the user's body part, and/or one or more temples (e.g., the first temple 204 and/or the second temple 205 of FIGS. 2A to 2B). A first display 250-1 for outputting an image to the left eye among the user's two eyes and a second display 250-2 for outputting an image to the right eye among the user's two eyes may be disposed on the first surface 310. The wearable device 103 may further include rubber or silicon packing, which are formed on the first surface 310, for preventing interference by light (e.g., ambient light) different from the light emitted from the first display 250-1 and the second display 250-2.

According to an embodiment, the wearable device 103 may include a camera 260-1 for photographing and/or tracking two eyes of the user adjacent to each of the first display 250-1 and the second display 250-2. The camera 260-1 may be referred to as the gaze tracking camera 260-1 of FIG. 2B. According to an embodiment, the wearable device 103 may include cameras 260-5 and 260-6 for photographing and/or recognizing the user's face. The cameras 260-5 and 260-6 may be referred to as a FT camera. The wearable device 103 may control an avatar representing a user in a virtual space, based on a motion of the user's face identified using the cameras 260-5 and 260-6.

Referring to FIG. 3B, a camera (e.g., cameras 260-7, 260-8, 260-9, 260-10, 260-11, and 260-12), and/or a sensor (e.g., the depth sensor 330) for obtaining information associated with the external environment of the wearable device 103 may be disposed on the second surface 320 opposite to the first surface 310 of FIG. 3A. For example, the cameras 260-7, 260-8, 260-9, and 260-10 may be disposed on the second surface 320 in order to recognize an external object. The cameras 260-7, 260-8, 260-9, and 260-10 may be referred to as the motion recognition cameras 260-2 and 260-3 of FIG. 2B.

For example, by using cameras 260-11 and 260-12, the wearable device 103 may obtain an image and/or video to be transmitted to each of the user's two eyes. The camera 260-11 may be disposed on the second surface 320 of the wearable device 103 to obtain an image to be displayed through the second display 250-2 corresponding to the right eye among the two eyes. The camera 260-12 may be disposed on the second surface 320 of the wearable device 103 to obtain an image to be displayed through the first display 250-1 corresponding to the left eye among the two eyes. The cameras 260-11 and 260-12 may be referred to as the photographing camera 260-4 of FIG. 2B.

According to an embodiment, the wearable device 103 may include the depth sensor 330 disposed on the second surface 320 in order to identify a distance between the wearable device 103 and the external object. By using the depth sensor 330, the wearable device 103 may obtain spatial information (e.g., a depth map) about at least a portion of the FoV of the user wearing the wearable device 103. Although not illustrated, a microphone for obtaining sound outputted from the external object may be disposed on the second surface 320 of the wearable device 103. The number of microphones may be one or more according to embodiments.

Although not illustrated in FIGS. 2A to 3B, according to an embodiment, the wearable device 103 may include at least one button. For example, the at least one button may be referred to as a physical button or a touch pad. For example, the at least one button may be used to convert the operation mode of the wearable device 103. For example, the mode may include an AR mode and a VR mode.

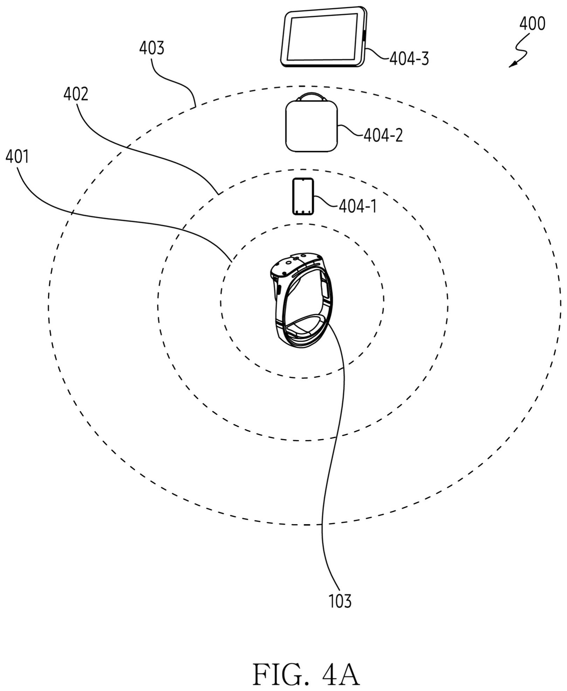

FIG. 4A illustrates an example of areas set with respect to a wearable device.

A wearable device 103 of FIG. 4A may indicate an example of the electronic device 101 of FIG. 1 or the wearable device 103 of FIGS. 2A to 3B.

FIG. 4A illustrates an example 400 of a plurality of areas 401, 402, and 403 in which the wearable device 103 is set with respect to the wearable device 103. Referring to the example 400, the wearable device 103 may detect a position of external objects 404-1, 404-2, and 404-3. The external object may include an electronic device or an object other than the electronic device. For example, the external object 404-1 may include a smartphone. For example, the external object 404-2 may include a bag. For example, the external object 404-3 may include a tablet PC. However, an embodiment of the present disclosure is not limited thereto.

For example, the external object, which is the electronic device, may also be referred to as a target object, an external object, a position tracking object, or a lost detection object. For example, the wearable device 103 may identify the position of the external objects 404-1, 404-2, and 404-3 by using at least one of a sensor (e.g., the sensor module 176 of FIG. 1), a camera (e.g., the camera module 180 of FIG. 1), or communication circuitry (e.g., the communication module 190 of FIG. 1) included in the wearable device 103. Although not illustrated in FIG. 4A, the wearable device 103 may track the position of the external objects 404-1, 404-2, and 404-3 via an external electronic device connected via the communication circuitry. In other words, by receiving a result of a position tracking of the external objects 404-1, 404-2, and 404-3 from the external electronic device, the wearable device 103 may identify (or detect) the position of the external objects 404-1, 404-2, and 404-3. For example, the external electronic device may also be referred to as a source device, a helper device, a server, or a tracking device.

According to an embodiment, the wearable device 103 may set the plurality of areas 401, 402, and 403. For example, the plurality of areas 401, 402, and 403 may include the areas 402 and 403 for identifying a risk of loss according to the position of the external objects 404-1, 404-2, and 404-3, and the area 401 in which a user of the wearable device 103 may move safely. For example, the areas 402 and 403 for identifying the risk of loss may be determined according to an operation mode of the wearable device 103. For example, the operation mode may include a VR mode and an AR mode. The VR mode may be referred to as a first mode. The AR mode may be referred to as a second mode or a see-through mode. For example, the area 402 may indicate an identification area according to the VR mode. For example, the area 402 may be referred to as a first identification area, a VR identification area, and a VR detection area. For example, the area 403 may indicate another identification area according to the AR mode. For example, the area 403 may be referred to as a second identification area, an AR identification area, an AR detection area, and a basic detection area.

According to an embodiment, the area 401 may be included in each of the area 402 and the area 403. For example, a size of the area 401 may be smaller than a size of the area 402 and a size of the area 403. In addition, for example, the area 402 may be included in the area 403. For example, the size of the area 402 may be smaller than the size of the area 403. Referring to the example 400, the area 401, the area 402, and the area 403 may be set with respect to the wearable device 103. In the example 400, an example in which the area 401, the area 402, and the area 403 are formed in a circle is illustrated, but it is merely for convenience of a description, and an embodiment of the present disclosure is not limited thereto. For example, the area 401, the area 402, and the area 403 may be formed in a shape different from a circle.

Referring to the example 400, the wearable device 103 may identify that the external object 404-1 is positioned within the area 402. In addition, the wearable device 103 may identify that the external object 404-2 is positioned within the area 403. In addition, the wearable device 103 may identify that the external object 404-3 is positioned outside the area 403. For example, the wearable device 103 may identify that a risk of loss of the external object 404-1 is low in a state where the VR mode is being executed. Alternatively, the wearable device 103 may identify that a risk of loss of the external object 404-2 and the external object 404-3 is high in the state where the VR mode is being executed. For example, the wearable device 103 may identify that the risk of loss of the external object 404-1 and the external object 404-2 is low in a state where the AR mode is being executed. Alternatively, the wearable device 103 may identify that the risk of loss of the external object 404-3 is high in the state where the AR mode is being executed. In the example 400, an example of detecting a risk of loss (or detecting lost) according to different positions of the three external objects 404-1, 404-2, and 404-3 is described, but an embodiment of the present disclosure is not limited thereto. For example, the position of the external object 404-1 may be changed based on motion (or movement) of the external object 404-1, and accordingly, the wearable device 103 may identify the risk of loss of the external object 404-1.

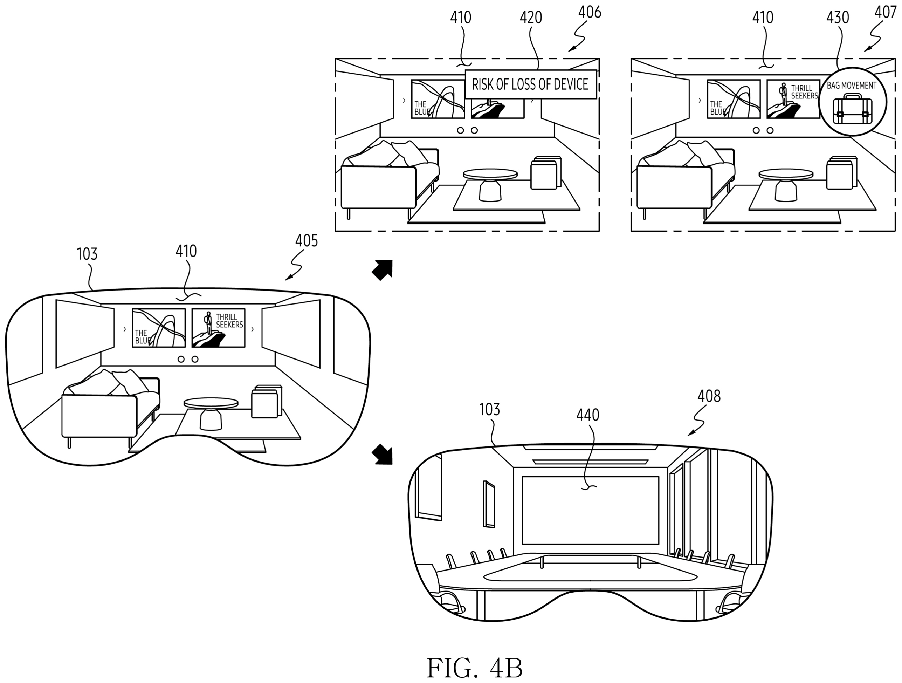

As described above, the wearable device 103 may notify the user of the wearable device 103 of information on the identified risk of loss. Specific content associated with this will be described in FIG. 4B below.

FIG. 4B illustrates an example of a method in which a wearable device changes a visual object or an operation mode based on lost detection of an external object.

FIG. 4B illustrates examples 405, 406, 407, and 408 of a method of guiding the user of the wearable device 103 to a risk of loss by identifying the risk of loss for an external object in a state that the wearable device 103 executes the VR mode.

Referring to the example 405, the wearable device 103 may display a screen including a virtual environment 410 via a display in a state where the VR mode is executed. For example, the screen may include at least a portion of the virtual environment 410. The at least a portion may indicate the virtual environment 410 in a field of view (FoV) of the wearable device 103. For example, the wearable device 103 may execute the VR mode based on identifying an event for executing the VR mode. For example, the event may include at least one of an input with respect to a physical button included in the wearable device 103 for executing the VR mode, an input with respect to a partial area of the display, or a gesture of the user of the wearable device 103 on the FoV. For example, the physical button may include a button used for a conversion between an AR mode and the VR mode.

According to an embodiment, the wearable device 103 may provide the AR mode based on identifying that the user wears the wearable device 103. For example, a basic mode of the wearable device 103 may be the AR mode. The wearable device 103 may execute the VR mode based on identifying the event. However, an embodiment of the present disclosure is not limited thereto. For example, the basic mode of the wearable device 103 may be the VR mode. Alternatively, for example, the basic mode of the wearable device 103 may be a transmission mode different from the VR mode and the AR mode. For example, the transmission mode may indicate a state in which there is no provision of virtual information on an external environment, such as a state of wearing general glasses.

Although not illustrated in the example 405, the wearable device 103 may perform a position tracking of the external object while displaying the screen including the virtual environment 410 through the VR mode. For example, the wearable device 103 may directly identify a position of the external object based on communication circuitry included in the wearable device 103. Alternatively, for example, the wearable device 103 may identify the position of the external object by using an external electronic device connected with the wearable device 103 via the communication circuitry. In the example 405, by identifying the position in the area 402 of FIG. 4A, the wearable device 103 may display only the screen including the virtual environment 410.

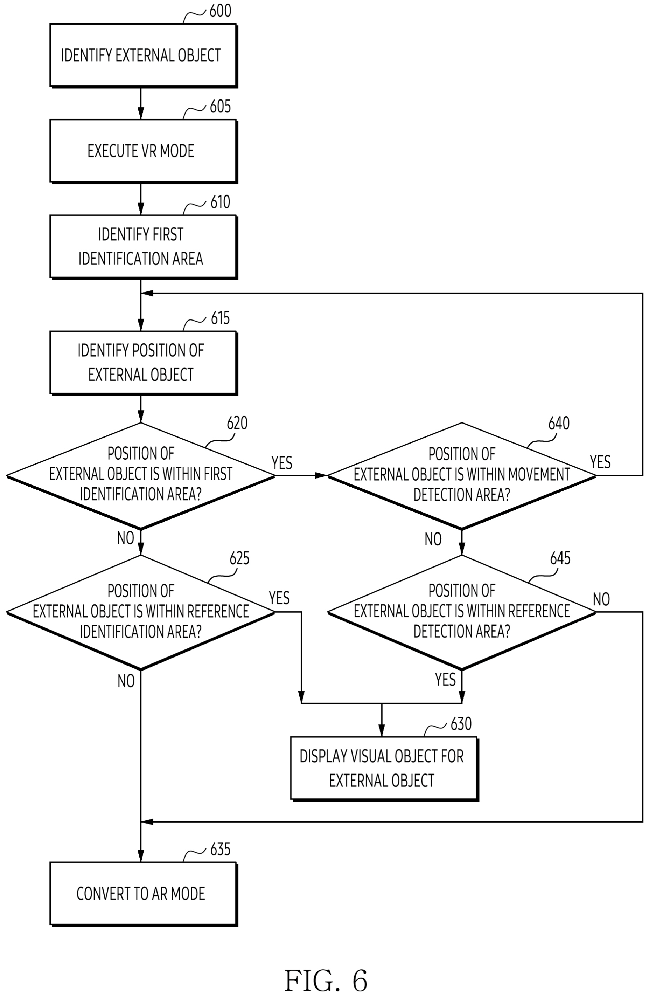

According to an embodiment, the wearable device 103 may identify the position based on a positioning technique while the AR mode is being executed. For example, the positioning technique may include a Wi-Fi-based positioning, a BLE-based positioning, an internet of things (IoT) server-based positioning, an ultra-wideband (UWB)-based positioning, a time of flight (ToF) camera-based positioning, and a GPS-based positioning. Alternatively, while the VR mode is being executed, the wearable device 103 may identify the position further based on at least one of information obtained from an access point (AP) to which the external object and the wearable device 103 are connected, or information on a signal received from the external object, together with the positioning technique. Specific content associated with this will be described in FIG. 6 below. Referring to the above description, unlike the AR mode that provides a real world via the display, the wearable device 103 may also use another position identification method together with the positioning technique to more accurately identify the position in the VR mode.

Referring to the example 406 and the example 407, the wearable device 103 may display a visual object 420 or a visual object 430 for the external object based on identifying that the position of the external object is positioned outside the area 402 of FIG. 4A. For example, the wearable device 103 may display the screen including the visual object 420 or the visual object 430 for the external object based on identifying that the position is outside the area 402 and within a reference identification area. For example, the reference identification area may indicate an area used to identify the risk of loss in the VR mode. For example, the reference identification area may include the area 402 of FIG. 4A and may be included in the area 403 of FIG. 4A. In other words, the reference identification area may define a range between the area 402 and the area 403.

According to an embodiment, the wearable device 103 may track the external object. For example, the wearable device 103 may track the external object using an image obtained via a camera included in the wearable device 103. The wearable device 103 may map between the external object identified via the communication circuitry and the external object tracked through the image. In other words, the wearable device 103 may identify the external object in the image based on the position identified via the communication circuitry. The wearable device 103 may display the visual object 420 or the visual object 430 in a display area in the display of the wearable device 103 corresponding to the position of the external object in the image.

According to an embodiment, the visual object 420 or the visual object 430 may at least partially overlap with respect to the virtual environment 410. For example, the visual object 420 or the visual object 430 may be displayed in a floated state on the virtual environment 410. For example, the visual object 420 may include a text for notifying the risk of loss. For example, the visual object 430 may include a rendered image representing the external object. In addition, the visual object 430 may further include a text for notifying movement of the image and the external object. However, an embodiment of the present disclosure is not limited thereto. For example, the wearable device 103 may also display a rendered image for an area of the real environment including the external object, or a real environment. For example, the rendered image or the real environment may at least partially overlap with respect to the virtual environment 410.

In the example 406 and the example 407, the visual objects 420 and 430 displayed by the wearable device 103 are illustrated in a case that the position is positioned outside the area 402 and is positioned within the reference identification area. The visual objects 420 and 430 being displayed may indicate that there is a probability of loss of the external object according to the position. Accordingly, the user may recognize the probability of loss of the external object.

Alternatively, referring to the example 408, the wearable device 103 may execute the AR mode changed from the VR mode based on identifying that the position of the external object is positioned outside the reference identification area. For example, the wearable device 103 may terminate the VR mode and execute the AR mode based on identifying that the position is outside the reference identification area. For example, according to executing the AR mode, the wearable device 103 may provide a real environment 440. For example, the real environment 440 may be provided via the display of the wearable device 103. For example, the real environment 440 may be provided by being penetrated via the display.

In the example 408, in a case that the position is positioned outside the reference identification area, the real environment 440 provided by the wearable device 103 is illustrated. The real environment 440 being provided may indicate that the probability of loss of the external object is high or the external object is lost, according to the position. Accordingly, the user may recognize that there is a higher risk of loss than the possibility of loss of the external object of the example 406 and the example 407.

Although not illustrated in FIG. 4B, the wearable device 103 may be connected with an external electronic device for identifying the position of the external object. For example, the wearable device 103 may be connected with the external electronic device through short-range communication. For example, the short-range communication may include Bluetooth (BT), Bluetooth low energy (BLE), Wireless fidelity (Wi-Fi), or ultra-wideband (UWB). However, an embodiment of the present disclosure is not limited thereto. For example, the wearable device 103 may be connected with the external electronic device based on wireless communication or wired communication technology different from the short-range communication.

As a method of detecting loss of the external object, an electronic device and a tracker may be used. For example, in a case that the external object is an electronic device, based on identifying that the external object is lost by itself, it may notify a server connected with the external object of information on the loss. Thereafter, the user of the external object may access the server and find the external object based on the loss information. However, there is a limitation that the external object may only be applied to some devices in that it should directly notify the information to the server. According to the limitation, a tracker, which is a separate electronic device for the lost detection (or the position tracking), may be used. The tracker may advertise a packet including identification information (e.g., an identity (ID)) of the tracker in a case that a communication connection with the electronic device is terminated while performing communication with the electronic device (e.g., a smartphone). Another electronic device receiving the packet may provide the identification information and position information to the server. The user of the electronic device may identify a position of a target including or attached to the tracker by accessing the server. However, even in a case of using the tracker, notifying of a lost state by the tracker may be limited according to a battery of the limited capacity of the tracker. In addition, the tracker may not identify whether the tracker is lost or not in a state where communication with the electronic device is not connected. The tracker transmitting an advertising packet to the electronic device after the lost state may be a post-mortem measure after the loss of the tracker occurs.

In addition, in a case that the wearable device 103 providing the extended reality provides a VR environment, the user of the wearable device 103 has a problem that it is difficult to accurately recognize an external situation of the user (or a real world).

An electronic device and a method according to embodiments of the present disclosure provide a technology for controlling a lost detection (or a position tracking) operation of the external object according to an operation mode of the wearable device 103 in the wearable device 103 that may provide the extended reality. For example, the external object may include an object representing an electronic device or a non-electronic device. The electronic device and the method according to embodiments of the present disclosure may identify a position for a designated external object and identify a risk of loss even while the user wearing the wearable device 103 uses the VR mode. The electronic device and the method according to embodiments of the present disclosure may change the visual object or the operation mode according to a degree of the identified risk of loss. Accordingly, the electronic device and the method according to embodiments of the present disclosure may provide information on the probability of loss or whether it has been lost in a situation where it is difficult for the user to check the external environment. In addition, the electronic device and the method according to embodiments of the present disclosure may improve usability of the wearable device 103.

FIG. 5 illustrates an exemplary block diagram of a wearable device that performs lost detection of an external object.

FIG. 5 illustrates an exemplary block diagram of a wearable device 103. Referring to FIG. 5, the wearable device 103 may be connected with an external object 520 which is a target of a position tracking. In this case, the external object 520 may be an electronic device. However, an embodiment of the present disclosure is not limited thereto. For example, the wearable device 103 may identify the external object 520 designated by a user of the wearable device 103 even in a case of an object that is a non-electronic device. For example, the wearable device 103 may identify a position of the external object 520 based on a sensor 505, a camera 507, or communication circuitry 509 with respect to the external object 520. In addition, the wearable device 103 may be connected with an external electronic device 530. The wearable device 103 may identify the position of the external object 520 using the connected external electronic device 530. FIG. 5 illustrates an example of the wearable device 103 connected with one external object 520 and one external electronic device 530, but an embodiment of the present disclosure is not limited thereto. For example, there may be no external electronic device 530 connected with the wearable device 103, or there may be two or more. In addition, for example, there may be two or more external objects 520 identified by or connected with the wearable device 103. The wearable device 103 of FIG. 5 may indicate an example of the electronic device 101 of FIG. 1 or the wearable device 103 of FIGS. 2A to 3B.

Referring to FIG. 5, an exemplary situation in which the wearable device 103, the external object 520, and the external electronic device 530 are connected to each other based on a wired network and/or a wireless network is illustrated. For example, the wired network may include a network such as Internet, a local area network (LAN), a wide area network (WAN), or a combination thereof. For example, the wireless network may include a network such as long term evolution (LTE), 5g new radio (NR), wireless fidelity (WiFi), Zigbee, near field communication (NFC), Bluetooth, Bluetooth low-energy (BLE), or a combination thereof. Although the wearable device 103, the external object 520, and the external electronic device 530 are illustrated as being directly connected, the wearable device 103, the external object 520, and the external electronic device 530 may be indirectly connected via one or more routers and/or access points (APs). In other words, the wearable device 103 is exemplified as being directly connected with communication circuitry (not illustrated) of the external object (or communication circuitry (not illustrated) of the external electronic device 530) via the communication circuitry 509, but an embodiment of the present disclosure is not limited thereto.

Referring to FIG. 5, the wearable device 103 according to an embodiment may include at least one of a processor 501, a display 503, the sensor 505, the camera 507, the communication circuitry 509, or memory 511. The processor 501, the display 503, the sensor 505, the camera 507, the communication circuitry 509, and the memory 511 may be electronically and/or operably coupled with each other by a communication bus. In the following, hardware components being operably coupled may mean that a direct connection or an indirect connection between the hardware components is established by wire or wirelessly such that a second hardware component is controlled by a first hardware component among the hardware components. Although illustrated based on different blocks, an embodiment is not limited thereto, and some of the hardware components illustrated in FIG. 5 (at least a portion of the processor 501, the communication circuitry 509, and the memory 511) may be included in a single integrated circuit such as a system on a chip (SoC). A type and/or the number of the hardware component included in the wearable device 103 is not limited to what is illustrated in FIG. 5. For example, the wearable device 103 may include only some of the hardware components illustrated in FIG. 5.

The processor 501 of the wearable device 103 according to an embodiment may include a hardware component for processing data based on one or more instructions. The hardware component for processing data may include, for example, an arithmetic and logic unit (ALU), a floating point unit (FPU), and a field programmable gate array (FPGA). As an example, the hardware component for processing data may include a central processing unit (CPU), a graphics processing unit (GPU), a digital signal processing (DSP), and/or a neural processing unit (NPU). The number of processors 501 may be one or more. For example, the processor 501 may have a structure of a multi-core processor such as a dual core, a quad core, or a hexa core. The processor 501 of FIG. 5 may include at least a portion of the processor 120 of FIG. 1.

For example, the processor 501 may include various processing circuitry and/or a plurality of processors. For example, a term "processor" used in the present document, including claims, may include various processing circuitry including at least one processor, and one or more of the at least one processor may be configured to perform various functions described below individually and/or collectively in a distributed method. As used below, in a case that "processor", "at least one processor", and "one or more processors" are described as being configured to perform various functions, these terms are not limited to an example and encompass situations in which one processor performs a portion of the cited functions and other processor(s) perform another portion of the cited functions, and/or situations in which one processor may perform all of the cited functions. Additionally, the at least one processor may include a combination of processors that perform various functions listed/disclosed, for example, in a distributed method. The at least one processor may execute program instructions to achieve or perform various functions.

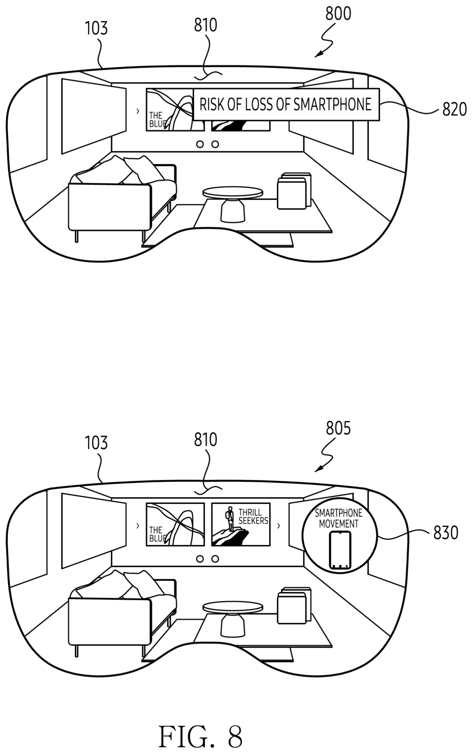

According to an embodiment, the display 503 of the wearable device 103 may output visualized information (e.g., a visual object of FIG. 8) to the user. The number of displays 503 included in the wearable device 103 may be one or more. For example, the display 503 may output visualized information to the user by being controlled by the processor 501 and/or a graphic processing unit (GPU) (not illustrated). The display 503 may include a flat panel display (FPD) and/or electronic paper. The FPD may include a liquid crystal display (LCD), a plasma display panel (PDP), a digital mirror device (DMD), one or more light emitting diodes (LEDs), and/or a micro LED. The LED may include an organic LED (OLED). The display 503 of FIG. 5 may include at least a portion of the display module 160 of FIG. 1.

In an embodiment, transmission of light may occur in at least a portion of the display 503. The wearable device 103 may provide a user experience associated with augmented reality by providing a coupling of light outputted via the display 503 and light penetrating the display 503 to the user. As described above with reference to FIGS. 2A and 2B, and/or 3A and 3B, the display 503 of the wearable device 103 according to an embodiment may have a structure for covering an entire FoV of the user or emitting light toward the FoV of the user, in a state of being worn on a part of a body of the user such as a head. Although not illustrated, the wearable device 103 may include another output means for outputting information in another form other than a visual form and an audible form. For example, the wearable device 103 may include at least one speaker for outputting an audio signal, and/or a motor (or an actuator) for providing haptic feedback based on vibration. In the example, the display 503 for providing the user experience associated with the augmented reality is exemplified, but an embodiment of the present disclosure is not limited thereto. For example, the wearable device 103 may render an image for providing a user experience associated with virtual reality, and may also display the rendered image via the display 503.

Although not illustrated in FIG. 5, the wearable device 103 according to an embodiment may include the sensor 505 and the camera 507. For example, the wearable device 103 may include the sensor 505 for identifying a designated event, another designated event, and an input of the user. For example, the sensor 505 may include an IMU (or an IMU sensor), a biometric sensor, an acoustic sensor (or a microphone (or a mic)), a gyro sensor, a gravity sensor, and/or an acceleration sensor. For example, the wearable device 103 may include the camera 507 (or an image sensor) for recognizing a real environment. The sensor 505 of FIG. 5 may include at least a portion of the sensor module 176 of FIG. 1. The camera 507 of FIG. 5 may include at least a portion of the camera module 180 of FIG. 1. For example, the wearable device 103 may also identify the position of the external object 520 via the sensor 505 and/or the camera 507. In this case, the external object 520 may represent an object (i.e., an object that is the non-electronic device) other than the electronic device. The external object 520 may be a target designated by the user of the wearable device 103. Alternatively, for example, the wearable device 103 may recognize the external object 520 in an image obtained via the camera 507 based on the position of the external object 520 obtained via the communication circuitry 509. For example, the wearable device 103 may map the position and the external object 520 in the image.

The communication circuitry 509 of the wearable device 103 according to an embodiment may include hardware for supporting transmission and/or reception of an electrical signal between the wearable device 103 and the external object 520 (or the external electronic device 530). The communication circuitry 509 may include at least one of, for example, a MODEM, an antenna, and an optic/electronic (O/E) converter. The communication circuitry 509 may support the transmission and/or reception of the electrical signal based on various types of communication means such as Ethernet, Bluetooth (BT), Bluetooth low energy (BLE), ZigBee, long term evolution (LTE), 5G new radio (NR), and wireless-fidelity (Wi-Fi). The communication circuitry 509 of FIG. 5 may include at least a portion of the communication module 190 and/or the antenna module 197 of FIG. 1.

The memory 511 of the wearable device 103 according to an embodiment may include a hardware component for storing data and/or instructions inputted to the processor 501 and/or outputted from the processor 501. The memory 511 may include, for example, volatile memory such as random-access memory (RAM), and/or non-volatile memory such as read-only memory (ROM). The volatile memory may include at least one of, for example, dynamic RAM (DRAM), static RAM (SRAM), Cache RAM, and pseudo SRAM (PSRAM). The non-volatile memory may include at least one of, for example, programmable ROM (PROM), erasable PROM (EPROM), electrically erasable PROM (EEPROM), flash memory, a hard disk, a compact disk, and an embedded multimedia card (eMMC). The memory 511 of FIG. 5 may include at least a portion of the memory 130 of FIG. 1.

In addition, although not illustrated in FIG. 5, the wearable device 103 according to an embodiment may include an output means for outputting information in another form other than a visualized form. For example, the wearable device 103 may include a speaker for outputting an acoustic signal. For example, the wearable device 103 may include a motor for providing haptic feedback based on vibration.

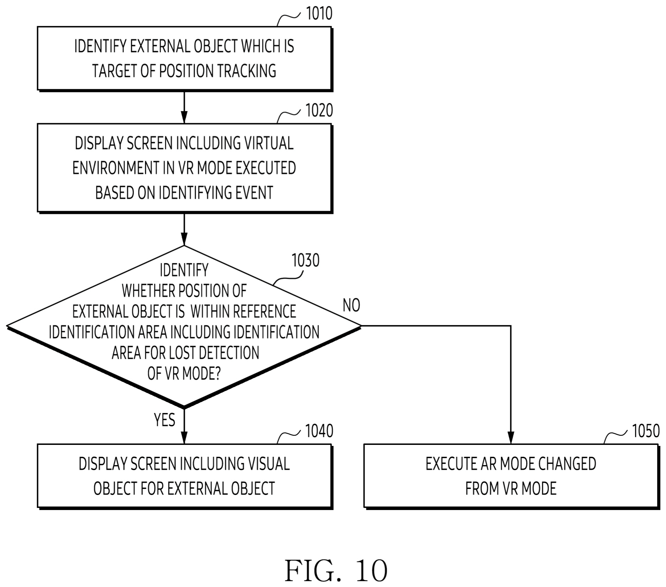

Referring to FIG. 5, in the memory 511 of the wearable device 103 according to an embodiment, one or more instructions (or commands) indicating a calculation and/or an operation to be performed on data by the processor 501 of the wearable device 103 may be stored. A set of one or more instructions may be referred to as a program, firmware, an operating system, a process, a routine, a sub-routine, and/or an application. In the following, an application being installed in the electronic device (e.g., the wearable device 103) may mean that one or more instructions provided in a form of the application are stored in the memory 511, and that the one or more applications are stored in an executable format (e.g., a file with an extension designated by an operating system of the wearable device 103) by the processor of the electronic device. The wearable device 103 according to an embodiment may perform an operation of FIGS. 6 and 10 by executing the one or more instructions stored in the memory 511.

According to an embodiment, the external object 520 may be the target of the position tracking. For example, the external object 520 may be the electronic device or the non-electronic device.

For example, the external object 520 which is the electronic device may establish a connection with the wearable device 103. The wearable device 103 may identify the position of the external object 520 based on the connection. For example, the wearable device 103 may obtain position information through the connection with the external object 520 in a designated distance, and identify the position of the external object 520 based on this. However, an embodiment of the present disclosure is not limited thereto. For example, the external object 520 in which the connection is established may be understood as being positioned within the designated distance of the wearable device 103. Alternatively, the external object 520, which is the electronic device, may transmit and receive a signal with the wearable device 103 in a state of not establishing the connection with the wearable device 103. For example, the wearable device 103 may transmit a request signal to the external object and receive a response signal from the external object 520. Based on the request signal and the response signal, the wearable device 103 may identify the position of the external object 520.

For example, the wearable device 103 may identify the position of the external object by receiving an advertising signal transmitted by the external object in a state where the connection is established. The position tracking performed in the state where the connection is established may be referred to as a device search service based on a connection method. Alternatively, for example, the wearable device 103 may identify the position of the external object by receiving the advertising signal transmitted by the external object in a state where the connection is not established. The position tracking performed in the state where the connection is not established may be referred to as a device search service based on a non-connection method. Although not described in the above-described example, the position tracking may further include a position tracking for establishing and performing the connection only in a necessary situation. In addition, for example, in the device search service, an external electronic device (e.g., the external electronic device 530) may provide the server with information notifying that the external object is in a state of being lost based on a signal received from the external object. The wearable device 103 may identify the position of the external object based on the information provided to the server.

For example, the external object 520, which is the non-electronic device, may be identified by the wearable device 103. For example, the wearable device 103 may identify the external object 520 designated by the user based on at least one of the sensor 505, the camera 507, or the communication circuitry 509. For example, the wearable device 103 may identify the position of the external object 520 according to information obtained using at least one of the sensor 505, the camera 507, or the communication circuitry 509.

According to an embodiment, the external electronic device 530 may be a subject that performs the position tracking. For example, the external electronic device 530 may perform the position tracking of the external object 520. For example, the external electronic device 530 may be connected with the wearable device 103. The wearable device 103 may perform the position tracking of the external object 520 using the external electronic device 530. For example, the external electronic device 530 may provide the wearable device 103 with a result of the position tracking. The external electronic device 530 may provide the result of the position tracking. The external electronic device 530 may be referred to as a source device, a helper device, a server, or a tracking device. For example, the external electronic device 530 may include at least one of user equipment, an electronic device (or a wearable device) having the same account information as the wearable device 103, or a server that manages another external electronic device.

FIG. 6 illustrates an example of an operation flow of a method of performing lost detection of an external object by a wearable device.

At least some of the methods of FIG. 6 may be performed by the wearable device 103 of FIG. 5. For example, the at least some of the methods may be controlled by a processor 501 of the wearable device 103. In the following embodiment, each operation may also be sequentially performed, but is not necessarily performed sequentially. For example, an order of each operation may be changed, and at least two operations may also be performed in parallel.

Referring to FIG. 6, in operation 600, the wearable device 103 may identify an external object. The external object may indicate a target of a position tracking. For example, the wearable device 103 may identify the external object based on communication circuitry 509. In this case, the external object may be an electronic device. For example, the wearable device 103 may identify the external object that is connectable or connected based on the communication circuitry 509. Alternatively, for example, the wearable device 103 may identify the external object designated by a user of the wearable device 103. For example, the user may designate the external object based on at least a portion of an input with respect to the wearable device 103. For example, the external object may be designated by the user when the wearable device 103 executes a VR mode in operation 605.

For example, the external object, which is the electronic device, may establish a connection with the wearable device 103. The wearable device 103 may identify a position of the external object based on the connection. For example, the wearable device 103 may obtain position information through the connection with the external object within a designated distance, and identify the position of the external object based on this. Alternatively, the external object, which is the electronic device, may transmit and receive a signal with the wearable device 103 in a state of not establishing the connection with the wearable device 103. For example, the wearable device 103 may transmit a request signal to the external object and receive a response signal from the external object. Based on the request signal and the response signal, the wearable device 103 may identify the position of the external object.

For example, the wearable device 103 may identify the position of the external object by receiving an advertising signal transmitted by the external object in a state where the connection is established. A position tracking performed in the state of having established the connection may be referred to as a device search service based on a connection method. Alternatively, for example, the wearable device 103 may identify the position of the external object by receiving the advertising signal transmitted by the external object in the state where the connection is not established. The position tracking performed in the state where the connection is not established may be referred to as a device search service based on a non-connection method. Although not described in the above-described example, the position tracking may further include a position tracking for establishing and performing the connection only in a necessary situation. In addition, for example, in the device search service, an external electronic device (e.g., the external electronic device 530) may provide the server with information notifying that the external object is in a state of being lost based on a signal received from the external object. The wearable device 103 may identify the position of the external object based on the information provided to the server.

For example, the external object, which is a non-electronic device, may be identified by the wearable device 103. For example, the wearable device 103 may identify the external object designated by the user based on at least one of a sensor 505, a camera 507, or the communication circuitry 509. For example, the wearable device 103 may identify the position of the external object according to information obtained using at least one of the sensor 505, the camera 507, or the communication circuitry 509.

In the operation 605, the wearable device 103 may execute the VR mode. For example, the wearable device 103 may execute the VR mode based on identifying an event for executing the VR mode. For example, the event may include at least one of an input with respect to a physical button included in the wearable device 103 for executing the VR mode, an input with respect to a partial area of the display, or a gesture of the user of the wearable device 103 on the FoV. For example, the event may be referred to as an event for the execution of the VR mode, a mode transition event, a mode change event, or a mode change input. For example, the physical button may include a button used for a conversion between an AR mode and the VR mode.

According to an embodiment, the wearable device 103 may provide the AR mode based on identifying that the user wears the wearable device 103. For example, a basic mode of the wearable device 103 may be the AR mode. The wearable device 103 may execute the VR mode based on identifying the event. However, an embodiment of the present disclosure is not limited thereto. For example, the basic mode of the wearable device 103 may be the VR mode.

In operation 610, the wearable device 103 may identify a first identification area. For example, the wearable device 103 may identify the first identification area based on the execution of the VR mode. For example, the first identification area (e.g., the first identification area 402 of FIG. 4A) may be referred to as an identification area according to the VR mode, an identification area, a VR identification area, or a VR detection area.

According to an embodiment, the wearable device 103 may identify the first identification area changed from a second identification area of the AR mode based on execution of the VR mode changed from the AR mode. For example, the second identification area (e.g., the second identification area 403 of FIG. 4A) may be referred to as an identification area according to the AR mode, another identification area, an AR identification area, an AR detection area, or a basic detection area. For example, the second identification area may include the first identification area. In other words, a size of the second identification area may be wider than a size of the first identification area.

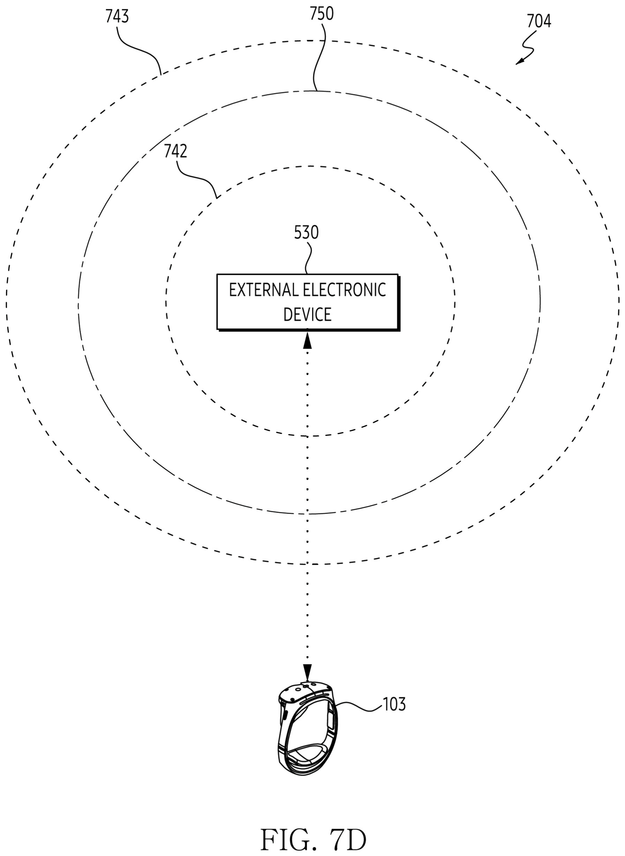

According to an embodiment, the first identification area may be identified based on at least one of complexity with respect to a surrounding area of the wearable device 103, a risk with respect to the surrounding area, a time at which the VR mode is executed, or a direction of a field of view (FoV) of the wearable device 103. For example, the surrounding area may indicate an area within a designated distance with respect to an omnidirection of the wearable device 103. For example, the complexity may be identified based on the presence or absence of an object or an obstacle in the surrounding area. For example, the risk may indicate a degree of a risk of the object or the obstacle in the surrounding area. For example, the time may include whether the time at which the VR mode is executed is evening or day. This is for, in a case that the time is evening, since a detection ability of the wearable device 103 for the surrounding area may be reduced, and it may be difficult for the user to identify the external object. In addition, for example, the FoV direction may indicate a direction in which the FoV of the wearable device 103 faces. For example, a portion corresponding to the FoV direction among the first identification area may be formed wider than another portion corresponding to a direction (e.g., an opposite direction) different from the FoV direction. Specific content associated with this will be described in FIG. 7D below.

In operation 615, the wearable device 103 may identify the position of the external object. For example, the wearable device 103 may identify whether the external object is moving.

According to an embodiment, the wearable device 103 may identify a distance between the wearable device 103 and the external object. For example, the wearable device 103 may identify the position of the external object based on the distance and a direction of the external object.

For example, the external object may include an electronic device connected with the same node (e.g., an access point (AP)) as the wearable device 103. For example, a plurality of APs may be disposed within a specific delay to provide a position-based service. The disposition of the plurality of APs may be configured according to a range of a service area or coverage of the AP. In addition, a server (e.g., Wi-Fi Positioning System (WPS)) that manages the APs may manage information on the plurality of APs and position information on the plurality of APs. For example, the wearable device 103 may identify a position of the external object connected to the same AP as the wearable device 103 based on the information on the plurality of APs and the position information on the plurality of APs obtained from the server.

For example, the external object may be identified based on strength of the signal received by the wearable device 103. For example, the wearable device 103 may estimate the distance based on the strength and a pattern of the received signal for indoor positioning. For example, the strength of the signal may include a received signal strength indicator (RSSI). For example, the RSSI may be an index indicating strength (unit: dBm) of a signal, in which strength of a signal is decreased according to a distance. The RSSI may be defined as the following equation.

[Equation 1]

$$RSSI = -(10n\log_{10}(d) - A)$$

The n may indicate an attenuation coefficient, the A may indicate an RSSI value measured at a specific position (e.g., 1 meter (m)) as a reference value, and the d may indicate a distance from a position from which a signal is transmitted. For example, the attenuation coefficient may be changed according to an environment in which a signal is transmitted and received. For example, the wearable device 103 may estimate a distance value based on the RSSI. The wearable device 103 may identify the position of the external object based on the estimated distance value.

For example, the external object may be identified based on a positioning technique (e.g., a Wi-Fi-based positioning, a BLE-based positioning, and an internet of things (IoT) server-based positioning). For example, the wearable device 103 may identify distance information and direction information for the external electronic device through reception and transmission of a high-frequency signal defined in 802.11.ad among Wi-Fi communication standards. Based on the distance information and the direction information, an AP connected with the external electronic device may identify an exact position of the electronic device. For example, the wearable device 103 may identify the position of the external object based on the distance information and the direction information obtained from the AP. In addition, for example, the wearable device 103 may identify the position of the external electronic device based on an angle of arrival (AoA) and an angle of departure (AoD) identified using BLE. For example, the wearable device may identify the position of the external object based on the AoA and the AoD. In addition, for example, the wearable device 103 may identify the external object based on information obtained from a server that manages an IoT device. For example, in the server, a position of external electronic devices, which are the IoT device connected to the server, may be designated or identified in advance. For example, the wearable device 103 may identify the position of the external object based on the server.

In addition, for example, the external object may cause the wearable device 103 to identify the external object by providing a signal including information that the external object has identified identify the wearable device 103 to a server (e.g., an IoT server) connected with the external object. For example, the external object may identify a surrounding object based on a camera or a sensor. For example, in identifying the object, a UWB sensor (e.g., a UWB radar or a UWB ranging) may be used. In this case, the object may include the wearable device 103 identified based on the camera or the sensor. The external object may provide information on the identified wearable device 103 to the server. For example, the external object may display a user interface via the display. For example, the user interface may be a user interface for a user to check whether a device (e.g., the wearable device 103) to be identified through the server (or a peer-to-peer (P2P)) is correct. Based on an input (or a gesture) of the user to the user interface, the external object may provide information to the server. The server may perform a connection (or a mapping) between the wearable device 103 and the external object based on the information. In this case, the connection may be accompanied by authentication (e.g., a predetermined pattern) in order to increase security. Accordingly, the wearable device 103 may also identify the external object. In the example, a case in which the object is the wearable device 103 is exemplified, but an embodiment of the present disclosure is not limited thereto. For example, by identifying a designated gesture or the user of the wearable device 103, the external object may identify that the wearable device 103 exists, and accordingly, may provide the information on the wearable device 103 to the server. The wearable device 103 may also identify the position of the external object based on the information provided from the server.

According to an embodiment, the wearable device 103 may use at least one of the methods of identifying the position of the external object. In addition, embodiments of the present disclosure are not limited thereto, and another method of identifying the position of the external object may be used. For example, while the AR mode is being executed, the wearable device 103 may identify the position based on the positioning technique. For example, the positioning technique may include the Wi-Fi-based positioning, the BLE-based positioning, the internet of things (IoT) server-based positioning, an ultra-wideband (UWB)-based positioning, a time of flight (ToF) camera-based positioning, and a GPS-based positioning. Alternatively, while the VR mode is being executed, the wearable device 103 may identify the position further based on at least one of information obtained from an access point (AP) to which the external object and the wearable device 103 are connected, or information on a signal received from the external object, together with the positioning technique. For example, the information on the signal may include a difference in a timing at which the signals are received or the reception strength of the signals. Alternatively, for example, the wearable device 103 may identify the position of the external object based on the BLE-based positioning while the AR mode is being executed, and may also identify the position of the external object based on a specific sensor (e.g., a ToF sensor) while the VR mode is being executed. In other words, in the VR mode, a method for identifying the position more precisely than in the AR mode may be used.

According to an embodiment, the wearable device 103 may track the external object. For example, the wearable device 103 may track the external object using an image obtained via the camera 507 included in the wearable device 103. The wearable device 103 may map between the external object identified via the communication circuitry 509 and the external object tracked through the image. In other words, the wearable device 103 may identify the external object in the image based on the position identified via the communication circuitry 509. The wearable device 103 may display a visual object (hereinafter, a visual object of operation 630) in a display area in a display 503 of the wearable device 103 corresponding to the position of the external object in the image.

In operation 620, the wearable device 103 may identify whether the position of the external object is within the first identification area. In the operation 620, based on identifying that the position is within the first identification area, the wearable device 103 may perform operation 640. Alternatively, in the operation 620, based on identifying that the position is outside the first identification area, the wearable device 103 may perform operation 625.

In the operation 625, the wearable device 103 may identify whether the position of the external object is within the reference identification area. According to an embodiment, the reference identification area may indicate, for example, an area used to identify a risk of loss in the VR mode. For example, the reference identification area may include the first identification area and may be included in the second identification area. In other words, the reference identification area may define a range between the first identification area and the second identification area. For example, the reference identification area may be referred to as the first reference area.

In the operation 625, the wearable device 103 may perform the operation 630 based on identifying that the position is within the reference identification area. In the operation 625, the wearable device 103 may perform operation 635 based on identifying that the position is outside the reference identification area.

In the operation 630, the wearable device 103 may display a visual object for the external object. For example, the wearable device 103 may display the screen including a visual object for the external object based on identifying that the position is outside the first identification area and within the reference identification area.

According to an embodiment, the visual object may at least partially overlap a virtual environment provided in the VR mode. For example, the visual object may be displayed in a floated state on the virtual environment. For example, the visual object may include a text for notifying the risk of loss. For example, the visual object may include a rendered image representing the external object. In addition, the visual object may further include a text for notifying movement of the image and the external object. However, an embodiment of the present disclosure is not limited thereto. Specific content associated with this will be described in FIG. 8 below.

In addition, according to an embodiment, the wearable device 103 may provide the user with a notification different from the visual object in the operation 630. For example, the wearable device 103 may notify the user of the risk of loss by outputting auditory information (e.g., sound). Alternatively, for example, the wearable device 103 may also notify the user of the risk of loss by outputting tactile information (e.g., vibration). Alternatively, for example, the wearable device 103 may also provide at least one of the auditory information and/or the tactile information together with the visual object.

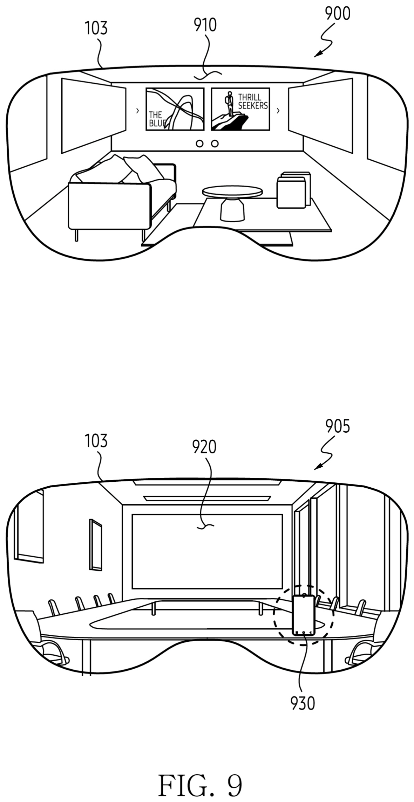

In the operation 635, the wearable device 103 may convert to the AR mode. For example, the wearable device 103 may change from the VR mode to the AR mode based on identifying that the position is outside the reference identification area. For example, the wearable device 103 may terminate the VR mode and execute the AR mode based on identifying that the position is outside the reference identification area. For example, the wearable device 103 may provide a real environment by executing the AR mode. For example, the real environment may be provided via a display of the wearable device 103. For example, the real environment may be provided by being penetrated via the display. Specific content associated with this will be described in FIG. 9 below.

In the operation 640, the wearable device 103 may identify whether the position of the external object is within a movement detection area. For example, the movement detection area may be defined with respect to the position of the external object. According to an embodiment, the movement detection area may be used to identify the lost detection of the external object. For example, the movement detection area may be included in the first identification area. For example, the movement detection area may be referred to as a detection area, an object detection area, or an object motion detection area.

In the operation 640, the wearable device 103 may perform the operation 615 based on identifying that the position of the external object is within the movement detection area. According to an embodiment, in a case of identifying that the position changed as the external object moves is within the movement detection area, the wearable device 103 may identify a new position of the external object in the operation 615. Alternatively, in the operation 640, the wearable device 103 may perform operation 645 based on identifying that the position of the external object is outside the movement detection area. According to an embodiment, in a case that the position is out of the movement detection area as the external object moves, the wearable device 103 may identify that there is a probability of loss.

In the operation 645, the wearable device 103 may identify whether the position of the external object is within the reference detection area. According to an embodiment, the reference detection area may be defined for the movement detection area. For example, the reference detection area may include the movement detection area. In addition, the reference detection area may be included in the first identification area. For example, the reference detection area may be referred to as a second reference area.

In the operation 645, the wearable device 103 may perform the operation 630 based on identifying the position within the reference detection area while outside the movement detection area. Accordingly, the wearable device 103 may display the visual object for the external object in the operation 630. Alternatively, the wearable device 103 may change to the AR mode in the operation 635 based on identifying the position outside the reference detection area.

In FIG. 6, an example of a method of performing the operation 640 and the operation 645 is illustrated, but an embodiment of the present disclosure is not limited thereto. For example, the method may also omit the operation 640 and the operation 645. In a case that the operation 640 and the operation 645 are omitted, the wearable device 103 may perform the operation 615 based on identifying that the position of the external object is within the first identification area in the operation 620. According to an embodiment, in a case of identifying that the position changed as the external object moves is within the movement detection area, the wearable device 103 may identify a new position of the external object in the operation 615.

Referring to the above description, an example in which the wearable device 103 tracks the position of the external object and performs the lost detection of the external object is described, but an embodiment of the present disclosure is not limited thereto. According to an embodiment, the wearable device 103 may be connected with an external electronic device and may track the position of the external object via the external electronic device. For example, the wearable device 103 may be connected with the external electronic device via the communication circuitry 509. For example, the wearable device 103 may be connected with the external electronic device through short-range communication. For example, the short-range communication may include Bluetooth (BT), Bluetooth low energy (BLE), Wireless fidelity (Wi-Fi), or ultra-wideband (UWB). However, an embodiment of the present disclosure is not limited thereto. For example, the wearable device 103 may also be connected with the external electronic device based on wireless communication or wired communication technology different from the short-range communication. For example, the wearable device 103 may identify the external object connected with the external electronic device. For example, the external object may include an electronic device that may be position-tracked by the external electronic device.

For example, the position of the external object may be tracked according to the device search service based on the connection method performed by the external electronic device or the device search service based on the non-connection method. The wearable device 103 may request a position tracking of the external object by providing information on the external object to the external electronic device. In addition, the wearable device 103 may provide information on the first identification area and the reference identification area to the external electronic device based on the execution of the VR mode. Accordingly, the external electronic device may change setting of the identification area for the lost detection of the external object. For example, the external electronic device may set the first identification area and the reference identification area. The external electronic device may identify a position changed according to the movement of the external object. The external electronic device may identify that the position is positioned outside the first identification area. For example, the external electronic device may identify that the position is outside the first identification area and within the reference identification area, and accordingly, may transmit a first signal to the wearable device 103. Alternatively, for example, the external electronic device may identify that the position is outside the reference identification area, and accordingly, may transmit a second signal to the wearable device 103. The first signal may indicate that the position is outside the first identification area and within the reference identification area. The second signal may indicate that the position is outside the reference identification area. The wearable device 103 receiving the signal as described above may perform the operation 630 or the operation 635. In addition, the external electronic device may identify the position of the external object and a relative position between the movement detection area and the reference detection area, even when the position changed according to the movement is within the first identification area. In addition, the external electronic device may transmit a signal indicating the relative position to the wearable device 103. Accordingly, the wearable device 103 may perform the operation 630 or the operation 635. Specific content associated with this may be applied substantially the same to the above-described operation 620 to operation 645.

In addition, although not described in FIG. 6, the wearable device 103 may identify the first identification area according to the execution of the VR mode and set a function of changing the VR mode to the visual object or the AR mode. For example, the wearable device 103 may set the first identification area in response to the execution of the VR mode based on activation of the function. For example, the function may be activated or deactivated based on an input of the user in a setting for a software application that provides extended reality or a global setting of the wearable device 103. Alternatively, for example, the function may be deactivated based on identifying that another user (e.g., a family) associated with the user is positioned around the user. It may be because a probability of loss of the external object is relatively low in a case that the other user exists. In addition, in a case that the function is deactivated, power consumption of the wearable device 103 may be reduced.

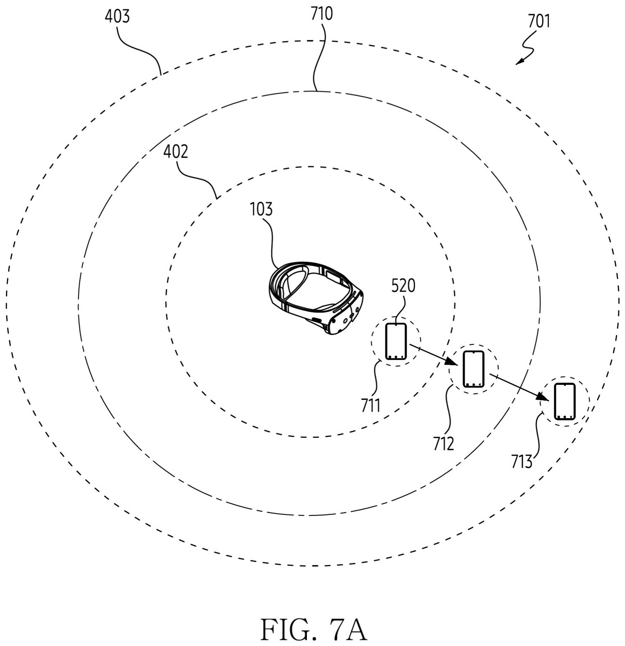

FIGS. 7A to 7D illustrate examples of areas set for lost detection of an external object according to an operation mode.

Referring to FIG. 7A, an example 701 in which a first identification area 402, a reference identification area 710, and a second identification area 403 are set for a wearable device 103 is illustrated. Referring to the example 701, the second identification area 403 may include the first identification area 402 and the reference identification area 710. In addition, the reference identification area 710 may include the first identification area 402. In other words, a size of the area may be enlarged in an order of the first identification area 402, the reference identification area 710, and the second identification area 403. In the example 701, an example in which the first identification area 402, the reference identification area 710, and the second identification area 403 are formed in a circle is illustrated, but it is merely for convenience of description, and an embodiment of the present disclosure is not limited thereto. For example, the first identification area 402, the reference identification area 710, and the second identification area 403 may be formed in a shape different from a circle.

Referring to the example 701, the wearable device 103 may identify an external object 520 while displaying a virtual environment in a VR mode. For example, the wearable device 103 may identify that the external object 520 is positioned within the first identification area 402. Based on identifying a position 711 of the external object 520, the wearable device 103 may maintain the display of a screen including the virtual environment in the VR mode. According to an embodiment, based on identifying of being changed from the position 711 to a position 712 according to movement of the external object 520, the wearable device 103 may display a visual object for the external object 520. For example, the wearable device 103 may display the screen including the visual object for the external object based on identifying the position 712 outside the first identification area 402 and within the reference identification area 710. For example, the visual object may include a text for notifying the risk of loss. For example, the visual object may include a rendered image for an area of a real environment including the external object or the real environment. In addition, the visual object may further include a text for notifying movement of the image and the external object. However, an embodiment of the present disclosure is not limited thereto. According to an embodiment, based on identifying of being changed from the position 712 to a position 713 according to movement of the external object 520, the wearable device 103 may execute an AR mode changed from the VR mode. For example, the wearable device 103 may terminate the VR mode and execute the AR mode based on identifying the position 713 other than the reference identification area 710. For example, the wearable device 103 may provide the real environment by executing the AR mode.

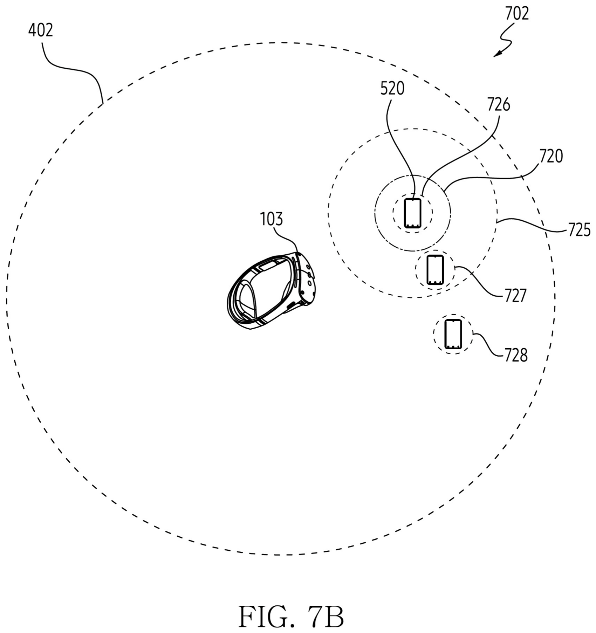

Referring to FIG. 7B, an example 702 in which a movement detection area 720 and a reference detection area 725 are further set for the external object 520 together with a plurality of areas (e.g., the first identification area 402, a reference identification area (not illustrated), and a second identification area (not illustrated)) set for the wearable device 103 is illustrated. Referring to the example 702, content of the first identification area 402 may be applied substantially the same as in FIG. 7A. The reference detection area 725 may include the movement detection area 720. In other words, the reference detection area 725 may have a wider size than a size of the movement detection area 720. In addition, the reference detection area 725 and the movement detection area 720 may be included in the first identification area 402. In the example 702, an example in which the reference detection area 725 and the movement detection area 720 are formed in a circle is illustrated, but it is merely for convenience of description, and an embodiment of the present disclosure is not limited thereto. For example, the reference detection area 725 and the movement detection area 720 may be formed in a shape different from a circle.

Referring to the example 702, the wearable device 103 may identify the external object 520 while displaying the virtual environment in the VR mode. For example, the wearable device 103 may identify that the external object 520 is positioned within the first identification area 402. Based on identifying a position 726 of the external object 520, the wearable device 103 may maintain the display of a screen including the virtual environment in the VR mode. According to an embodiment, based on identifying of being changed from the position 726 to a position 727 according to movement of the external object 520, the wearable device 103 may display a visual object for the external object 520. For example, the wearable device 103 may display the screen including the visual object for the external object based on identifying the position 727 outside the movement detection area 720 and within the reference detection area 725. For example, the visual object may include a text for notifying the risk of loss. For example, the visual object may include a rendered image for an area of a real environment including the external object or the real environment. In addition, the visual object may further include a text for notifying movement of the image and the external object. However, an embodiment of the present disclosure is not limited thereto. According to an embodiment, based on identifying of being changed from the position 727 to a position 728 according to movement of the external object 520, the wearable device 103 may execute an AR mode changed from the VR mode. For example, the wearable device 103 may terminate the VR mode and execute the AR mode based on identifying the position 728 outside the reference detection area 725. For example, the wearable device 103 may provide a real environment by executing the AR mode.

According to an embodiment, the wearable device 103 may change the size of the movement detection area 720 and the reference detection area 725 according to movement speed of the external object 520. For example, the wearable device 103 may set the size of the movement detection area 720 and the reference detection area 725 to be small to react more sensitively in a case that the movement speed of the external object 520 is high. Accordingly, the wearable device 103 may perform a display of the visual object and a conversion to the AR mode more quickly.

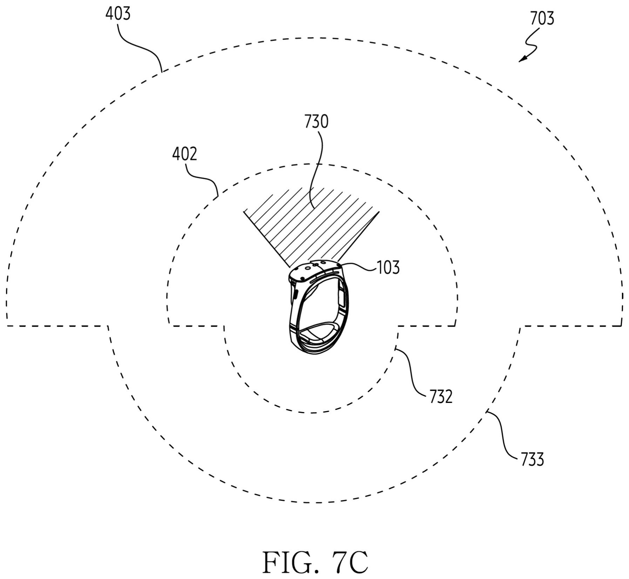

Referring to FIG. 7C, an example 703 of the first identification area 402 and the second identification area 403 identified based on a direction of a FoV 730 of the wearable device 103 is illustrated. Referring to the example 703, content of the first identification area 402 and the second identification area 403 may be applied substantially the same as in FIG. 7A.

Referring to the example 703, a shape of the first identification area 402 and the second identification area 403 may be identified based on the direction in which the FoV 730 faces. According to an embodiment, the first identification area 402 and the second identification area 403 may be formed wider in the direction in which the FoV 730 faces. For example, a portion 732 of the first identification area 402 in a direction (e.g., an opposite direction) different from the direction in which the FoV 730 faces may be formed narrower than a remaining portion of the first identification area 402 in which the direction faces. In addition, for example, a portion 733 of the second identification area 403 in a direction (e.g., an opposite direction) different from the direction in which the FoV 730 faces may be formed narrower than a remaining portion of the second identification area 403 in which the direction faces. However, an embodiment of the present disclosure is not limited thereto. According to an embodiment, the first identification area 402 used in the VR mode may have the same size regardless of the direction of the FoV 730. In addition, although not illustrated in the example 703, according to an embodiment, the reference identification area 710 may also be set based on the FoV 730.

Referring to FIG. 7D, an example 704 in which a first identification area 742, a reference identification area 750, and a second identification area 743 are set for an external electronic device 530 is illustrated. Referring to the example 704, content of the first identification area 742, the reference identification area 750, and the second identification area 743 may be applied substantially the same as the content of the first identification area 402, the reference identification area 710, and the second identification area 403 of FIG. 7A.

Referring to the example 704, the external electronic device 530 may set the first identification area 742 and the reference identification area 750 based on receiving a signal indicating that the wearable device 103 operates in the VR mode. For example, the signal may include information (e.g., a size) on the first identification area 742 and the reference identification area 750. The first identification area 742 and the reference identification area 750 may be included in the second identification area 743 for the AR mode. According to an embodiment, the first identification area 742 and the reference identification area 750 may be identified based on a distance between the wearable device 103 and the external electronic device 530. For example, in a case that the distance is a first distance, the first identification area 742 and the reference identification area 750 may be set to a first size and a second size, respectively. In a case that the distance is a second distance longer than the first distance, the first identification area 742 and the reference identification area 750 may be set to a third size and a fourth size, respectively. The third size and the fourth size may be formed to be narrower than the first size and the second size. It may be to more sensitively identify lost detection as the distance between the wearable device 103 and the external electronic device 530 increases. In addition, although not illustrated in the example 704, according to an embodiment, the movement detection area 720 and the reference detection area 725 of the example 702 may be set. For example, the movement detection area 720 and the reference detection area 725 may be changed based on the distance. Although not illustrated in the example 704 of FIG. 7D, the external electronic device 530 may be positioned in a direction (or in a gaze direction) viewed by a user wearing the wearable device 103. However, an embodiment of the present disclosure is not limited thereto. For example, the external electronic device 530 may also be positioned in an area incapable of being visually checked by the user of the wearable device 103 although a connection with the wearable device 103 is established.

FIG. 8 illustrates an example in which a wearable device displays a visual object for notifying a risk of loss of an external object.

Referring to FIG. 8, a wearable device 103 illustrates examples 800 and 805 of displaying a visual object for the external object based on identifying that the position of the external object is positioned outside the first identification area and within the reference identification area.

Referring to the examples 800 and 805, the wearable device 103 may display a screen including a virtual environment 810. For example, the wearable device 103 may display the screen including the virtual environment 810 via a display 503 in a state of executing a VR mode.

Referring to the example 800, the wearable device 103 may display a visual object 820 for the external object based on identifying that the position is outside the first identification area and within the reference identification area. According to an embodiment, the visual object 820 may at least partially overlap the virtual environment 810. For example, the visual object 820 may be displayed in a floated state on the virtual environment 810. For example, the visual object 820 may include a text for notifying the risk of loss. For example, the text may include "a risk of loss of a smartphone". Although a case in which the external object is a smartphone is exemplified in the example of FIG. 8, an embodiment of the present disclosure is not limited thereto. For example, the external object may include a non-electronic device such as a bag.

Referring to the example 805, the wearable device 103 may display a visual object 830 for the external object based on identifying that the position is outside the first identification area and within the reference identification area. According to an embodiment, the visual object 830 may at least partially overlap the virtual environment 810. For example, the visual object 830 may include a rendered image representing the external object. In addition, the visual object 830 may further include a text for notifying movement of the image and the external object. For example, the image may include an image representing a pre-stored smartphone, and the text may include "smartphone movement". However, an embodiment of the present disclosure is not limited thereto. For example, the external object may include a non-electronic device such as a bag.

A user of the wearable device 103 may recognize a probability of loss of the smartphone, which is the external object, based on the visual object 820 and the visual object 830.

Although not illustrated in FIG. 8, according to an embodiment, the wearable device 103 may provide another information instead of displaying the visual object 820 (or the visual object 830) for the external object based on identifying that the position is outside the first identification area and within the reference identification area. For example, the other information may include sound outputted via a sound output device of the wearable device 103 or vibration based on a motor of the wearable device 103. In addition, according to an embodiment, the wearable device 103 may display the visual object 820 (or the visual object 830) for the external object and may also provide the other information together, based on identifying that the position is outside the first identification area and within the reference identification area.

According to an embodiment, the wearable device 103 may also change setting for the display of the visual object 820 (or the visual object 830). For example, the setting may include a font of a text included in the visual object 820 (or the visual object 830), a color of the visual object 820 (or the visual object 830), and a background color other than the visual object 820 (or the visual object 830). For example, the wearable device 103 may change the setting according to a degree of the risk of loss. The degree of the risk of loss may be identified based on movement speed of the external object or a priority (or importance) set for each external object.

FIG. 9 illustrates an example in which a wearable device changes an operation mode.

Referring to FIG. 9, the wearable device 103 illustrates examples 900 and 905 of executing the AR mode changed from the VR mode based on identifying that the position of the external object is positioned outside the reference identification area.

Referring to the example 900, the wearable device 103 may display a screen including a virtual environment 910 in a state in which the VR mode is executed. For example, the wearable device 103 may display the screen including the virtual environment 910 via a display 503 based on identifying that the position of the external object is within the first identification area.

Referring to the example 905, the wearable device 103 may terminate the VR mode and execute the AR mode based on identifying that the position is outside the reference identification area. For example, the wearable device 103 may provide a real environment 920 by executing the AR mode. For example, the real environment 920 may be provided via the display 503 of the wearable device 103. For example, the real environment 920 may be provided by being penetrated via the display 503. For example, a user of the wearable device 103 may identify a smartphone 930 in the real environment 920. Accordingly, the user may recognize that there is a risk of loss at a higher level than a probability of loss of the smartphone 930, which is the external object.

According to an embodiment, the wearable device 103 may adjust a timing converted from the VR mode to the AR mode. For example, the wearable device 103 may change the setting according to a degree of the risk of loss. The degree of the risk of loss may be identified based on a movement speed of the external object, a priority (or importance) set for each external object, or complexity or a risk of a surrounding area of the wearable device 103.

FIG. 10 illustrates an example of an operation flow of a method in which a wearable device changes a visual object or an operation mode based on lost detection of an external object.

At least some of the methods of FIG. 10 may be performed by the wearable device 103 of FIG. 5. For example, the at least some of the methods may be controlled by a processor 501 of the wearable device 103. In the following embodiment, each operation may also be sequentially performed, but is not necessarily performed sequentially. For example, an order of each operation may also be changed, and at least two operations may also be performed in parallel.

In operation 1010, the wearable device 103 may identify an external object which is a target of a position tracking based on communication circuitry 509. The external object may indicate the target of the position tracking. For example, the wearable device 103 may identify the external object based on the communication circuitry 509. In this case, the external object may be an electronic device. For example, the wearable device 103 may identify the external object that is connectable or connected based on the communication circuitry 509. Alternatively, for example, the wearable device 103 may identify the external object designated by a user of the wearable device 103. For example, the user may designate the external object based on at least a portion of an input with respect to the wearable device 103. For example, the external object may be designated by the user when the wearable device 103 executes a VR mode.

For example, the external object, which is an electronic device, may establish a connection with the wearable device 103. The wearable device 103 may identify a position of the external object based on the connection. For example, the wearable device 103 may obtain position information through the connection with the external object within a designated distance, and identify the position of the external object based on this. Alternatively, the external object, which is the electronic device, may transmit and receive a signal with the wearable device 103 in a state of not establishing the connection with the wearable device 103. For example, the wearable device 103 may transmit a request signal to the external object and receive a response signal from the external object. Based on the request signal and the response signal, the wearable device 103 may identify the position of the external object. A position tracking performed in the state of having established the connection may be referred to as a device search service based on a connection method. In addition, a position tracking performed in the state where the connection is not established may be referred to as a device search service based on a non-connection method. Although not described in the above-described example, the position tracking may further include a position tracking for establishing and performing a connection only in a necessary situation.

For example, the external object, which is a non-electronic device, may be identified by the wearable device 103. For example, the wearable device 103 may identify the external object designated by the user based on at least one of a sensor 505, a camera 507, or the communication circuitry 509. For example, the wearable device 103 may identify the position of the external object according to information obtained using at least one of the sensor 505, the camera 507, or the communication circuitry 509.

In operation 1020, the wearable device 103 may display a screen including a virtual environment, via a display 503, in a VR mode executed based on identifying an event.

According to an embodiment, the wearable device 103 may execute the VR mode. For example, the wearable device 103 may execute the VR mode based on identifying the event for executing the VR mode. For example, the event may include at least one of an input with respect to a physical button included in the wearable device 103 for executing the VR mode, an input with respect to a partial area of the display, or a gesture of the user of the wearable device 103 on the FoV. For example, the event may be referred to as an event for the execution of the VR mode, a mode transition event, a mode change event, or a mode change input. For example, the physical button may include a button used for a conversion between the AR mode and the VR mode.

According to an embodiment, the wearable device 103 may identify a first identification area. For example, the wearable device 103 may identify the first identification area based on the execution of the VR mode. For example, the first identification area may be referred to as an identification area according to the VR mode, an identification area, a VR identification area, or a VR detection area.

According to an embodiment, the wearable device 103 may identify the first identification area changed from a second identification area of the AR mode based on the execution of the VR mode changed from the AR mode. For example, the second identification area may be referred to as an identification area according to the AR mode, another identification area, an AR identification area, an AR detection area, or a basic detection area. For example, the second identification area may include the first identification area. In other words, a size of the second identification area may be wider than a size of the first identification area.

According to an embodiment, the first identification area may be identified based on at least one of complexity with respect to a surrounding area of the wearable device 103, a risk with respect to the surrounding area, a time at which the VR mode is executed, or a direction of a field of view (FoV) of the wearable device 103.

In operation 1030, the wearable device 103 may identify whether the position of the external object is within a reference identification area including an identification area for lost detection of the VR mode.

According to an embodiment, the wearable device 103 may identify the position of the external object. For example, the wearable device 103 may identify whether the external object is moving.

According to an embodiment, the wearable device 103 may identify a distance between the wearable device 103 and an external object. For example, the wearable device 103 may identify the position of the external object based on the distance and the direction of the external object. For example, the wearable device 103 may identify the position based on information obtained from an access point (AP) to which the wearable device 103 and the external object are connected, information (e.g., a difference in strength of a signal or a timing at which signals are received) on the signal received by the wearable device 103, or a positioning technique. For example, the positioning technique may include at least one of a Wi-Fi-based positioning, a BLE-based positioning, an internet of things (IoT) server-based positioning, an ultra-wideband (UWB)-based positioning, a time of flight (ToF) camera-based positioning, and a GPS-based positioning.

According to an embodiment, the wearable device 103 may identify whether the position of the external object is within the reference identification area. According to an embodiment, the reference identification area may indicate, for example, an area used to identify a risk of loss in the VR mode.

In the operation 1030, based on identifying that the position is within the reference identification area, the wearable device 103 may perform operation 1040. Alternatively, in the operation 1030, based on identifying that the position is outside the reference identification area, the wearable device 103 may perform operation 1050.

In the operation 1040, the wearable device 103 may display the screen including a visual object for the external object via a display 503 based on identifying that the position is within the reference identification area. In the operation 1050, the wearable device 103 may convert the VR mode to an augmented reality (AR) mode based on identifying that the position is outside the reference identification area.

According to an embodiment, the wearable device 103 may display the visual object for the external object. For example, the wearable device 103 may display the screen including the visual object for the external object based on identifying that the position is outside the first identification area and within the reference identification area.

According to an embodiment, the wearable device 103 may track the external object. For example, the wearable device 103 may track the external object using an image obtained via the camera 507 included in the wearable device 103. The wearable device 103 may map between the external object identified via the communication circuitry 509 and the external object tracked through the image. In other words, the wearable device 103 may identify the external object in the image based on the position identified via the communication circuitry 509. The wearable device 103 may display the visual object on a display area in the display 503 of the wearable device 103 corresponding to the position of the external object in the image.

According to an embodiment, the visual object may at least partially overlap the virtual environment provided in the VR mode. For example, the visual object may be displayed in a floated state on the virtual environment. For example, the visual object may include a text for notifying the risk of loss. For example, the visual object may include a rendered image representing the external object. In addition, the visual object may further include a text for notifying movement of the image and the external object. However, an embodiment of the present disclosure is not limited thereto. For example, the wearable device 103 may also display a rendered image for an area of a real environment including the external object or the real environment. For example, the rendered image or the real environment may at least partially overlap with respect to the virtual environment.

In addition, according to an embodiment, the wearable device 103 may provide a notification different from the visual object to the user. For example, the wearable device 103 may notify the user of the risk of loss by outputting auditory information (e.g., sound). Alternatively, for example, the wearable device 103 may also notify the user of the risk of loss by outputting tactile information (e.g., vibration). Alternatively, for example, the wearable device 103 may also provide at least one of the auditory information and/or the tactile information together with the visual object.

According to an embodiment, the wearable device 103 may also change setting for a display of the visual object. For example, the setting may include a font of a text included in the visual object, a color of the visual object, and a background color other than the visual object. For example, the wearable device 103 may change the setting according to a degree of the risk of loss. The degree of the risk of loss may be identified based on a movement speed of the external object or a priority (or importance) set for each external object.

According to an embodiment, the wearable device 103 may execute the AR mode. For example, the wearable device 103 may change from the VR mode to the AR mode based on identifying that the position is outside the reference identification area. For example, the wearable device 103 may terminate the VR mode and execute the AR mode based on identifying that the position is outside the reference identification area. For example, the wearable device 103 may provide the real environment by executing the AR mode. For example, the real environment may be provided via a display of the wearable device 103. For example, the real environment may be provided by being penetrated via the display.

According to an embodiment, the wearable device 103 may adjust a timing converted from the VR mode to the AR mode. For example, the wearable device 103 may change the setting according to the degree of the risk of loss. The degree of the risk of loss may be identified based on the movement speed of the external object, the priority (or the importance) set for each external object, or the complexity or the risk of the surrounding area of the wearable device 103.

Referring to FIGS. 1 to 10, an electronic device and a method according to embodiments of the present disclosure provide technology for controlling a lost detection (or a position tracking) operation of the external object according to an operation mode of the wearable device 103 in the wearable device 103 that may provide extended reality. For example, the external object may include an object representing an electronic device or a non-electronic device. The electronic device and the method according to embodiments of the present disclosure may identify a position for a designated external object and identify a risk of loss even while the user wearing the wearable device 103 uses the VR mode. The electronic device and the method according to embodiments of the present disclosure may change the visual object or the operation mode according to a degree of the identified risk of loss. Accordingly, the electronic device and the method according to embodiments of the present disclosure may provide information on a probability of loss or whether it has been lost in a situation where it is difficult for the user to check the external environment. In addition, the electronic device and the method according to embodiments of the present disclosure may improve usability of the wearable device 103.

A wearable device 103 as described above may include memory 511 including one or more storage media, storing instructions. The wearable device 103 may include a display 503. The wearable device 103 may include communication circuitry 509. The wearable device 103 may include at least one processor 501. The instructions, when executed individually or collectively by the at least one processor 501, may cause the wearable device 103 to, based on the communication circuitry 509, identify an external object which is a target of a position tracking. The instructions, when executed individually or collectively by the at least one processor 501, may cause the wearable device 103 to, in a virtual reality (VR) mode being executed based on identifying an event, display, via the display 503, a screen including a virtual environment. The instructions, when executed individually or collectively by the at least one processor 501, may cause the wearable device 103 to identify whether a position of the external object is within a reference identification area including an identification area for lost detection of the VR mode. The instructions, when executed individually or collectively by the at least one processor 501, may cause the wearable device 103 to, based on identifying that the position is within the reference identification area, display, via the display 503, the screen including a visual object for the external object. The instructions, when executed individually or collectively by the at least one processor 501, may cause the wearable device 103 to, based on identifying that the position is outside the reference identification area, convert the VR mode to an augmented reality (AR) mode.

According to an embodiment, the external object may include an electronic device providing information for the position tracking in a state where a connection with the wearable device 103 is established, or an electronic device for providing information for the position tracking by transmitting and receiving a signal in a state where the connection with the wearable device 103 is not established.

According to an embodiment, the instructions, when executed individually or collectively by the at least one processor 501, may cause the wearable device 103 to execute the VR mode based on obtaining the event. The event may include at least one of an input with respect to a physical button included in the wearable device 103 for executing the VR mode, an input with respect to a partial area of the display 503, or a gesture of a user of the wearable device 103 on a field of view (FOV) of the wearable device 103.

According to an embodiment, the instructions, when executed individually or collectively by the at least one processor 501, may cause the wearable device 103 to execute the AR mode based on identifying that a user of the wearable device 103 wears the wearable device 103. The instructions, when executed individually or collectively by the at least one processor 501, may cause the wearable device 103 to execute the VR mode converted from the AR mode based on identifying the event.

According to an embodiment, the instructions, when executed individually or collectively by the at least one processor 501, may cause the wearable device 103 to identify the identification area for the lost detection of the VR mode based on the VR mode being executed. The identification area for the lost detection of the VR mode may be included in another identification area for lost detection of the AR mode. The other identification area may include the reference identification area.

According to an embodiment, the identification area may be identified based on at least one of complexity with respect to a surrounding area of the wearable device 103, a risk with respect to the surrounding area, a time at which the VR mode is executed, or a direction of a field of view (FOV) of the wearable device 103.

According to an embodiment, the instructions, when executed individually or collectively by the at least one processor 501, may cause the wearable device 103 to identify the position of the external object based on the communication circuitry 509. The position may be identified based on a positioning technique in the AR mode. The position may be identified further based on at least one of information obtained from an access point (AP) at which the wearable device 103 and the external object are connected or information with respect to a signal received from the external object, together with the positioning technique in the VR mode.

According to an embodiment, the instructions, when executed individually or collectively by the at least one processor 501, may cause the wearable device 103 to identify whether the position is within the identification area. The instructions, when executed individually or collectively by the at least one processor 501, may cause the wearable device

103 to, based on identifying that the position is outside the identification area, identify whether the position is within the reference identification area. The instructions, when executed individually or collectively by the at least one processor 501, may cause the wearable device 103 to, based on identifying that the position is within the identification area, identify whether the position is within a movement detection area with respect to the external object. The movement detection area may be included in the identification area and used to identify lost detection of the external object.

According to an embodiment, the instructions, when executed individually or collectively by the at least one processor 501, may cause the wearable device 103 to, based on identifying that the position is outside the movement detection area, identify whether the position of the external object is within a reference detection area including the movement detection area. The instructions, when executed individually or collectively by the at least one processor 501, may cause the wearable device 103 to identify a new position of the external object based on identifying that the position is within the movement detection area.

According to an embodiment, the instructions, when executed individually or collectively by the at least one processor 501, may cause the wearable device 103 to display, via the display 503, the visual object for the external object based on identifying that the position is within the reference detection area. The instructions, when executed individually or collectively by the at least one processor 501, may cause the wearable device 103 to execute the AR mode converted from the VR mode based on identifying that the position is outside the reference detection area.

According to an embodiment, the visual object may include a rendered image representing the external object or a text for notifying a risk of loss of the external object.

According to an embodiment, the instructions, when executed individually or collectively by the at least one processor 501, may cause the wearable device 103 to connect with an external electronic device performing the position tracking of the external object via the communication circuitry 509. The instructions, when executed individually or collectively by the at least one processor 501, may cause the wearable device 103 to, in response to an execution of the VR mode, transmit a signal notifying the execution of the VR mode to the external electronic device. The signal may include information with respect to the identification area and the reference identification area.

According to an embodiment, the instructions, when executed individually or collectively by the at least one processor 501, may cause the wearable device 103 to receive, from the external electronic device, another signal notifying that the position of the external object is outside the identification area. The instructions, when executed individually or collectively by the at least one processor 501, may cause the wearable device 103 to identify whether the position is within the reference identification area based on the other signal.

According to an embodiment, the identification area and the reference identification area may be identified based on a position of the external electronic device. The identification area and the reference identification area may be associated with a first distance between the external electronic device and the external object, or a second distance between the wearable device 103 and the external electronic device.

As described above, a method performed by a wearable device 103 may include identifying an external object which is a target of a position tracking. The method may include, in a virtual reality (VR) mode being executed based on identifying an event, displaying, a screen including a virtual environment. The method may include identifying whether a position of the external object is within a reference identification area including an identification area for lost detection of the VR mode. The method may include, based on identifying that the position is within the reference identification area, displaying, the screen including a visual object for the external object. The method may include, based on identifying that the position is outside the reference identification area, converting the VR mode to an augmented reality (AR) mode.

According to an embodiment, the external object may include an electronic device providing information for the position tracking in a state where a connection with the wearable device 103 is established, or an electronic device providing information for the position tracking by transmitting and receiving a signal in a state where the connection with the wearable device 103 is not established.

According to an embodiment, the method may include executing the VR mode based on obtaining the event. The event may include at least one of an input with respect to a physical button included in the wearable device 103 for executing the VR mode, an input with respect to a partial area of a display 503 of the wearable device 103, or a gesture of a user of the wearable device 103 on a field of view (FOV) of the wearable device 103.

According to an embodiment, the method may include executing the AR mode based on identifying that a user of the wearable device 103 wears the wearable device 103. The method may include executing the VR mode converted from the AR mode based on identifying the event.

According to an embodiment, the method may include identifying the identification area for the lost detection of the VR mode based on the VR mode being executed. The identification area for the lost detection of the VR mode may be included in another identification area for lost detection of the AR mode. The other identification area may include the reference identification area.

According to an embodiment, the identification area may be identified based on at least one of complexity with respect to a surrounding area of the wearable device 103, a risk with respect to the surrounding area, a time at which the VR mode is executed, or a direction of a field of view (FOV) of the wearable device 103.

A non-transitory computer-readable storage medium as described above, when executed individually or collectively by at least one processor 501 of a wearable device 103 including a display 503 and communication circuitry 509, may store one or more programs including instructions that cause the wearable device 103 to, based on the communication circuitry 509, identify an external object which is a target of a position tracking. The non-transitory computer-readable storage medium, when executed individually or collectively by the at least one processor 501, may store one or more programs including instructions that cause the wearable device 103 to, in a virtual reality (VR) mode being executed based on identifying an event, display, via the display 503, a screen including a virtual environment. The non-transitory computer-readable storage medium, when executed individually or collectively by the at least one processor 501, may store one or more programs including instructions that cause the wearable device 103 to identify whether a position of the external object is within a reference identification area including an identification area for lost detection of the VR mode. The non-transitory computer-readable storage medium, when executed individually or collectively by the at least one processor 501, may store one or more programs including instructions that cause the wearable device 103 to, based on identifying that the position is within the reference identification area, display, via the display 503, the screen including a visual object for the external object. The non-transitory computer-readable storage medium, when executed individually or collectively by the at least one processor 501, may store one or more programs including instructions that cause the wearable device 103 to, based on identifying that the position is outside the reference identification area, convert the VR mode to an augmented reality (AR) mode.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. A wearable device(103) comprising:

    memory(511) comprising one or more storage media, storing instructions;
    a display(503);
    communication circuitry(509); and
    at least one processor(501) including processing circuitry;
    wherein the instructions, when executed individually or collectively by the at least one processor(501), cause the wearable devic(103)e to:

        based on the communication circuitry(509), identify an external object which is a target of a position tracking;
        in a virtual reality (VR) mode being executed based on identifying an event, display, via the display(503), a screen including a virtual environment;
        identify whether a position of the external object is within a reference identification area including an identification area for lost detection of the VR mode;
        based on identifying that the position is within the reference identification area, display, via the display(503), the screen including a visual object for the external object; and
        based on identifying that the position is outside the reference identification area, convert the VR mode to an augmented reality (AR) mode.

2. The wearable device(103) of claim 1,
    wherein the external object includes:

        an electronic device providing information for the position tracking in a state where a connection with the wearable device(103) is established, or
        an electronic device for providing information for the position tracking by transmitting and receiving a signal in a state where the connection with the wearable device(103) is not established.

3. The wearable device(103) of claim 1,
    wherein the instructions, when executed individually or collectively by the at least one processor(501), cause the wearable device(103) to:

        execute the VR mode based on obtaining the event, and
        wherein the event includes at least one of an input with respect to a physical button included in the wearable device(103) for executing the VR mode, an input with respect to a partial area of the display(503), or a gesture of a user of the wearable device(103) on a field of view (FOV) of the wearable device(103).

4. The wearable device(103) of claim 1,
    wherein the instructions, when executed individually or collectively by the at least one processor(501), cause the wearable device(103) to:

        execute the AR mode based on identifying that a user of the wearable device(103) wears the wearable device(103); and
        execute the VR mode converted from the AR mode based on identifying the event.

5. The wearable device(103) of claim 1,
    wherein the instructions, when executed individually or collectively by the at least one processor(501), cause the wearable device(103) to:

identify the identification area for the lost detection of the VR mode based on the VR mode being executed,
wherein the identification area for lost detection of the VR mode is included in another identification area for lost detection of the AR mode, and
wherein the another identification area includes the reference identification area.

6. The wearable device(103) of claim 1,
wherein the identification area is identified based on at least one of complexity with respect to a surrounding area of the wearable device(103), a risk with respect to the surrounding area, a time at which the VR mode is executed, or a direction of a field of view (FOV) of the wearable device(103).

7. The wearable device(103) of claim 1,
wherein the instructions, when executed individually or collectively by the at least one processor(501), cause the wearable device(103) to:

identify the position of the external object based on the communication circuitry(509),
wherein the position is identified based on a positioning technique in the AR mode, and
wherein the position is identified further based on at least one of information obtained from an access point (AP) at which the wearable device(103) and the external object are connected or information with respect to a signal received from the external object, together with the positioning technique in the VR mode.

8. The wearable device(103) of claim 1,
wherein the instructions, when executed individually or collectively by the at least one processor(501), cause the wearable device(103) to:

identify whether the position is within the identification area;
based on identifying that the position is outside the identification area, identify whether the position is within the reference identification area; and
based on identifying that the position is within the identification area, identify whether the position is within a movement detection area with respect to the external object, and
wherein the movement detection area is included in the identification area and used to identify lost detection of the external object.

9. The wearable device(103) of claim 8,
wherein the instructions, when executed individually or collectively by the at least one processor(501), cause the wearable device(103) to:

based on identifying that the position is outside the movement detection area, identify whether the position of the external object is within a reference detection area including the movement detection area; and
identify a new position of the external object based on identifying that the position is within the movement detection area.

10. The wearable device(103) of claim 9,
wherein the instructions, when executed individually or collectively by the at least one processor(501), cause the wearable device(103) to:

display, via the display(503), the visual object for the external object based on identifying that the position is within the reference detection area; and
execute the AR mode converted from the VR mode based on identifying that the position is outside the reference detection area.

11. The wearable device(103) of claim 1,
wherein the visual object includes a rendered image representing the external object or a text for notifying a risk of loss of the external object.

12. The wearable device(103) of claim 1,
wherein the instructions, when executed individually or collectively by the at least one processor(501), cause the wearable device(103) to:

connect with an external electronic device performing the position tracking of the external object via the communication circuitry(509); and

in response to an execution of the VR mode, transmit a signal notifying the execution of the VR mode to the external electronic device, and

wherein the signal includes information with respect to the identification area and the reference identification area.

13. The wearable device(103) of claim 12,

wherein the instructions, when executed individually or collectively by the at least one processor(501), cause the wearable device(103) to:

receive, from the external electronic device, another signal notifying that the position of the external object is outside the identification area; and

identify whether the position is within the reference identification area based on the another signal.

14. A method performed by a wearable device(103) comprising:

identifying an external object which is a target of a position tracking;

in a virtual reality (VR) mode being executed based on identifying an event, displaying, via the display, a screen including a virtual environment;

identifying whether a position of the external object is within a reference identification area including an identification area for lost detection of the VR mode;

based on identifying that the position is within the reference identification area, displaying, the screen including a visual object for the external object; and

based on identifying that the position is outside the reference identification area, converting the VR mode to an augmented reality (AR) mode.

15. A non-transitory computer-readable storage medium, when executed individually or collectively by at least one processor(501) of a wearable device(103) including a display(503) and communication circuitry(509), storing one or more programs including instructions that cause the wearable device(103) to:

based on the communication circuitry(509), identify an external object which is a target of a position tracking;

in a virtual reality (VR) mode being executed based on identifying an event, display, via the display(503), a screen including a virtual environment;

identify whether a position of the external object is within a reference identification area including an identification area for lost detection of the VR mode;

based on identifying that the position is within the reference identification area, display, via the display(503), the screen including a visual object for the external object; and

based on identifying that the position is outside the reference identification area, convert the VR mode to an augmented reality (AR) mode.

FIG. 1

FIG. 2A

FIG. 2B

FIG. 3A

FIG. 3B

FIG. 4A

FIG. 4B

FIG. 5

FIG. 6

FIG. 7A

FIG. 7B

FIG. 7C

FIG. 7D

FIG. 8

FIG. 9

IDENTIFY EXTERNAL OBJECT WHICH IS
TARGET OF POSITION TRACKING
— 1010

DISPLAY SCREEN INCLUDING VIRTUAL
ENVIRONMENT IN VR MODE EXECUTED
BASED ON IDENTIFYING EVENT
— 1020

IDENTIFY
WHETHER POSITION OF
EXTERNAL OBJECT IS WITHIN REFERENCE
IDENTIFICATION AREA INCLUDING IDENTIFICATION
AREA FOR LOST DETECTION
OF VR MODE?
— 1030

NO

YES

DISPLAY SCREEN INCLUDING VISUAL
OBJECT FOR EXTERNAL OBJECT
— 1040

EXECUTE AR MODE CHANGED
FROM VR MODE
— 1050

FIG. 10

## INTERNATIONAL SEARCH REPORT

| International application No. |
| --- |
| **PCT/KR2024/006833** |

### A. CLASSIFICATION OF SUBJECT MATTER

**G06F 3/01**(2006.01)i; **G06T 19/00**(2011.01)i; **G06F 1/16**(2006.01)i; **G06F 3/04842**(2022.01)i; **H04W 4/80**(2018.01)i

According to International Patent Classification (IPC) or to both national classification and IPC

### B. FIELDS SEARCHED

Minimum documentation searched (classification system followed by classification symbols)

G06F 3/01(2006.01); G06F 1/16(2006.01); G06F 3/0481(2013.01); G06K 9/00(2006.01); G06T 11/00(2006.01); G09G 5/00(2006.01); G09G 5/37(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 가상현실(VR), 증강현실(AR), 위치(location), 객체(object), 스위치(switch), 분실 (lost)

### C. DOCUMENTS CONSIDERED TO BE RELEVANT

| Category* | Citation of document, with indication, where appropriate, of the relevant passages | Relevant to claim No. |
| --- | --- | --- |
| A | US 2022-0180842 A1 (PCMS HOLDINGS, INC.) 09 June 2022 (2022-06-09)<br>See paragraphs [0137]-[0141]; and claims 28-47. | 1-15 |
| A | EP 3549127 B1 (LOGITECH EUROPE S.A.) 01 September 2021 (2021-09-01)<br>See paragraphs [0193]-[0201]; and claims 1-11. | 1-15 |
| A | US 11288872 B2 (PACCAR INC.) 29 March 2022 (2022-03-29)<br>See column 8, line 58 - column 11, line 65; and claims 1-19. | 1-15 |
| A | US 10175492 B2 (EON REALITY, INC.) 08 January 2019 (2019-01-08)<br>See column 6, line 55 - column 8, line 3; and claims 1-20. | 1-15 |
| A | KR 10-2022-0067128 A (SAMSUNG ELECTRONICS CO., LTD.) 24 May 2022 (2022-05-24)<br>See paragraphs [0139]-[0146]; and claims 1-20. | 1-15 |

☐ Further documents are listed in the continuation of Box C.    ☑ See patent family annex.

| | |
| --- | --- |
| \*   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **11 September 2024** | **11 September 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 726 506 A1

## INTERNATIONAL SEARCH REPORT
### Information on patent family members

| International application No. |
|---|
| **PCT/KR2024/006833** |

| Patent document cited in search report | | | Publication date (day/month/year) | Patent family member(s) | | | Publication date (day/month/year) |
|---|---|---|---|---|---|---|---|
| US | 2022-0180842 | A1 | 09 June 2022 | CN | 110663011 | A | 07 January 2020 |
| | | | | CN | 110663011 | B | 12 April 2024 |
| | | | | EP | 3631601 | A1 | 08 April 2020 |
| | | | | US | 11276375 | B2 | 15 March 2022 |
| | | | | US | 2021-0158779 | A1 | 27 May 2021 |
| | | | | WO | 2018-217470 | A1 | 29 November 2018 |
| EP | 3549127 | B1 | 01 September 2021 | CN | 110168475 | A | 23 August 2019 |
| | | | | CN | 110168475 | B | 18 October 2022 |
| | | | | EP | 3539087 | A1 | 18 September 2019 |
| | | | | EP | 3539087 | A4 | 30 September 2020 |
| | | | | EP | 3539087 | B1 | 02 November 2022 |
| | | | | EP | 3549127 | A1 | 09 October 2019 |
| | | | | EP | 3599532 | A2 | 29 January 2020 |
| | | | | EP | 3599532 | A3 | 17 June 2020 |
| | | | | EP | 3599532 | B1 | 22 June 2022 |
| | | | | EP | 4155867 | A1 | 29 March 2023 |
| | | | | US | 10317989 | B2 | 11 June 2019 |
| | | | | US | 10754416 | B2 | 25 August 2020 |
| | | | | US | 10754417 | B2 | 25 August 2020 |
| | | | | US | 10928888 | B2 | 23 February 2021 |
| | | | | US | 11112856 | B2 | 07 September 2021 |
| | | | | US | 11366512 | B2 | 21 June 2022 |
| | | | | US | 11487353 | B2 | 01 November 2022 |
| | | | | US | 2017-0262045 | A1 | 14 September 2017 |
| | | | | US | 2018-0173323 | A1 | 21 June 2018 |
| | | | | US | 2018-0181194 | A1 | 28 June 2018 |
| | | | | US | 2018-0181199 | A1 | 28 June 2018 |
| | | | | US | 2020-0019232 | A1 | 16 January 2020 |
| | | | | US | 2021-0103331 | A1 | 08 April 2021 |
| | | | | US | 2021-0333864 | A1 | 28 October 2021 |
| | | | | WO | 2018-090060 | A1 | 17 May 2018 |
| | | | | WO | 2018-102615 | A1 | 07 June 2018 |
| US | 11288872 | B2 | 29 March 2022 | US | 10657721 | B2 | 19 May 2020 |
| | | | | US | 2019-0251747 | A1 | 15 August 2019 |
| | | | | US | 2020-0327736 | A1 | 15 October 2020 |
| US | 10175492 | B2 | 08 January 2019 | US | 2016-0314624 | A1 | 27 October 2016 |
| | | | | US | 2018-0074332 | A1 | 15 March 2018 |
| KR | 10-2022-0067128 | A | 24 May 2022 | US | 11847258 | B2 | 19 December 2023 |
| | | | | US | 2022-0155861 | A1 | 19 May 2022 |
| | | | | WO | 2022-108076 | A1 | 27 May 2022 |

Form PCT/ISA/210 (patent family annex) (July 2022)